# EUROPÄISCHE PATENTSCHRIFT

(11) **EP 4 725 306 B1**
(45) Veröffentlichungstag und Bekanntmachung des Hinweises auf die Patenterteilung: **08.07.2026**
(21) Anmeldenummer: 24205469.0
(22) Anmeldetag: 09.10.2024
(51) Int. Cl.: A01M 1/02, A01M 1/10, G06V 20/52

(54) **ÜBERWACHEN VON GLIEDERFÜSSERN**
MONITORING ARTHROPODS
SURVEILLANCE D'ARTHROPODES

(43) Veröffentlichungstag der Anmeldung: 15.04.2026
(73) Patentinhaber: Bayer Aktiengesellschaft, 51373 Leverkusen (DE)
(72) Erfinder: TEMPEL, Matthias, 50935 Köln (DE); BORN, Fabian, 57319 Bad Berleburg (DE); KLEINSCHROTH, Lukas, 51371 Leverkusen (DE)
(74) Vertreter: BIP Patents

(56) Entgegenhaltungen:
- WO-A1-2020/058175
- WO-A1-2023/239794
- CN-A- 115 530 138
- US-A1- 2009 153 659
- US-A1- 2021 000 097
- US-B2- 9 664 813

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein IoT-Gerät, ein System und ein Verfahren.

### EINLEITUNG

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Kulturpflanzen verursacht.

WO2020/058175A1 offenbart Systeme und Verfahren zum Erkennen von Arthropoden in einer Region, in der Pflanzen wachsen, mittels einer Kamera.

WO2023/239794A1 offenbart Systeme und Verfahren zum Überwachen von Arthropodenvektoren und zum Erstellen von projektiven oder prädiktiven Modellen.

US2009/153659A1 offenbart Systeme und Verfahren zum Erkennen und Klassifizieren von Objekten in Bildern, wie zum Beispiel Insekten und andere Gliederfüßer.

In der modernen Landwirtschaft spielt die Erfassung und Erkennung von Schädlingen innerhalb von landwirtschaftlich genutzten Flächen eine wichtige Rolle.

### ZUSAMMENFASSUNG

Diesen und weiteren Aspekten widmet sich die vorliegende Offenbarung.

Ein erster Gegenstand der vorliegenden Offenbarung ist ein IoT-Gerät zum Überwachen von Gliederfüßern umfassend
- eine Kamera,
- eine Sendeeinheit,
- eine Steuereinheit,
- eine Energieversorgungseinheit und
- Mittel zum reversiblen Verbinden des IoT-Geräts mit einer Fangvorrichtung für Gliederfüßer,
dadurch gekennzeichnet, dass das IoT-Gerät konfiguriert ist zu erkennen, mit welcher Art von Fangvorrichtung es verbunden ist.

Ein weiterer Gegenstand der vorliegenden Offenbarung ist ein System zum Überwachen von Gliederfüßern umfassend:
- eine Fangvorrichtung für Gliederfüßer und
- ein IoT-Gerät,

wobei das IoT-Gerät
   - eine Kamera,
   - eine Sendeeinheit,
   - eine Steuereinheit,
   - eine Energieversorgungseinheit und Mittel zum reversiblen Verbinden des IoT-Geräts mit der Fangvorrichtung umfasst,
dadurch gekennzeichnet, dass das IoT-Gerät konfiguriert ist zu erkennen, mit welcher Art von Fangvorrichtung es verbunden ist.

Ein weiterer Gegenstand der vorliegenden Offenbarung ist ein Verfahren umfassend die Schritte:
- Bereitstellen einer Fangvorrichtung für Gliederfüßer umfassend einen Sammelbereich,
- Bereitstellen eines IoT-Geräts, wobei das IoT-Gerät
   - eine Kamera,
   - eine Sendeeinheit,
   - eine Steuereinheit,
   - eine Energieversorgungseinheit und
   - Mittel zum reversiblen Verbinden des IoT-Geräts mit der Fangvorrichtung umfasst,
   wobei das IoT-Gerät konfiguriert ist zu erkennen, mit welcher Art von Fangvorrichtung es verbunden ist,
- Verbinden des IoT-Geräts mit der Fangvorrichtung, wobei die Kamera beim Verbinden automatisch so gegenüber dem Sammelbereich ausgerichtet wird, dass zumindest ein Teil des Sammelbereichs auf einem Bildsensor der Kamera abgebildet wird,
- Erzeugen einer Bildaufnahme des Sammelbereichs,
- Speichern der Bildaufnahme und/oder Übermitteln der Bildaufnahme und/oder von Informationen betreffend die Bildaufnahme an ein separates Computersystem.

Weitere Gegenstände finden sich in der ausführlichen Offenbarung, den Ansprüchen und den Zeichnungen.

### KURZE BESCHREIBUNG DER ZEICHNUNGEN

Fig. 1 zeigt eine Ausführungsform des IoT-Geräts aus verschiedenen Perspektiven.
Fig. 2 zeigt eine vergrößerte Darstellung des IoT-Geräts aus Fig. 1 aus einer der in Fig.1 gezeigten Perspektiven.
Fig. 3 zeigt eine vergrößerte Darstellung des IoT-Geräts aus Fig. 1 aus einer anderen der in Fig. 1 gezeigten Perspektiven.
Fig. 4 zeigt eine vergrößerte Darstellung des IoT-Geräts aus Fig. 1 aus einer weiteren der in Fig. 1 gezeigten Perspektiven.
Fig. 5 zeigt eine Ausführungsform eines Verbindungsmittlers aus verschiedenen Perspektiven.
Fig. 6 zeigt eine vergrößerte Darstellung des Verbindungsmittlers aus Fig. 5 aus einer der in Fig. 5 gezeigten Perspektiven.
Fig. 7 zeigt eine vergrößerte Darstellung des Verbindungsmittlers aus Fig. 5 aus einer anderen der in Fig. 5 gezeigten Perspektiven.
Fig. 8 zeigt eine vergrößerte Darstellung des Verbindungsmittlers aus Fig. 5 aus einer weiteren der in Fig. 5 gezeigten Perspektiven.
Fig. 9 zeigt beispielhaft und schematisch eine Ausführungsform des IoT-Geräts der vorliegenden Offenbarung.

### AUSFÜHRLICHE OFFENBARUNG

Die Gegenstände der vorliegenden Offenbarung werden im Folgenden näher erläutert, ohne zwischen den Gegenständen der vorliegenden Offenbarung (IoT-Gerät, System, Verfahren) zu unterscheiden. Vielmehr sollen die nachfolgenden Ausführungen sinngemäß für alle Gegenstände der Offenbarung gelten, unabhängig davon, in welchem Zusammenhang (IoT-Gerät, System, Verfahren) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein, im Umfang des Gegenstands der Ansprüche.

Der Artikel "ein" bedeutet "ein oder mehrere"; es sei denn es steht ein "nur" oder "lediglich" davor. Dies gilt analog auch für den Artikel "eine".

Die Ausdrücke "basierend auf" und "auf Basis von" bedeuten "zumindest teilweise basierend auf", sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Ansonsten haben die in dieser Offenbarung verwendeten Begriffe die Bedeutung, die sie im Stand der Technik, insbesondere in dem in dieser Offenbarung angeführten Stand der Technik, haben.

Ein Gegenstand der vorliegenden Offenbarung ist ein IoT-Gerät.

"IoT" ist die Abkürzung für "Internet of Things", was in deutscher Sprache "Internet der Dinge" bedeutet. Das Internet der Dinge (Internet of Things, IoT) bezieht sich auf ein Netz von Geräten, die mit dem Internet verbunden sind und Daten sammeln, austauschen und/oder verarbeiten können.

Ein "IoT-Gerät" ist ein eindeutig identifizierbares elektronisches Rechengerät, das konfiguriert ist, Daten über ein Netzwerk ohne die Notwendigkeit menschlicher Interaktionen von-Mensch-zu-Mensch oder von-Mensch-zu-Computer zu übertragen, zu empfangen, zu verarbeiten und/oder darauf zu reagieren. Ein "IoT-Gerät" ist üblicherweise mit Computerchips, Sensoren und Kommunikationshardware ausgestattet, die es ihm ermöglichen, Daten aus seiner Umgebung und/oder von anderen Geräten zu sammeln, zu senden und/oder zu empfangen. Ein IoT-Gerät funktioniert autonom innerhalb eines Internet-der-Dinge-Ökosystems, das vernetzte IoT-Geräte umfasst, die über das Internet und/oder andere Netzwerkinfrastrukturen kommunizieren und/oder interagieren. Ein IoT-Gerät zeichnet sich durch seine Fähigkeit aus, mit minimaler menschlicher Intervention zu operieren, wobei es eingebettete Software, Sensoren und Netzwerkkonnektivität nutzt, um seine festgelegten Funktionen auszuführen.

Das IoT-Gerät ist Teil eines Systems zum Überwachen von Gliederfüßern.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

In einer anderen Ausführungsform der vorliegenden Offenbarung bezieht sich der Begriff "Gliederfüßer" ausschließlich auf Schädlinge für Nutzpflanzen.

Der Begriff "Überwachen" bedeutet üblicherweise, dass mit Hilfe des IoT-Geräts und/oder Systems der vorliegenden Offenbarung die Anwesenheit eines oder mehrerer Gliederfüßer in einem Bereich (z.B. in einem Feld für den Anbau von Kulturpflanzen) festgestellt werden kann.

Das IoT-Gerät umfasst Mittel zum Erzeugen von Bildaufnahmen. Dabei handelt es sich üblicherweise um eine oder mehrere Kameras. In einer Ausführungsform weist das IoT-Gerät genau eine Kamera auf.

Eine "Kamera" ist ein Gerät oder System, das dazu bestimmt ist, Bildaufnahmen von Objekten und/oder Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD-(CCD *= charge-coupled device)* oder CMOS-Sensoren (CMOS *= complementary metal-oxidesemiconductor*). Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

Die mindestens eine Kamera kann auf einen Sammelbereich gerichtet werden. Mit anderen Worten: die Kamera kann so ausgerichtet werden, dass sie Bildaufnahmen von dem Sammelbereich oder einem Teil davon erzeugt.

Der Sammelbereich kann ein Teil einer Fangvorrichtung für Gliederfüßer sein. Eine solche Fangvorrichtung kann eine weitere Komponente des Systems der vorliegenden Offenbarung zum Überwachen von Gliederfüßern sein.

Die Kamera wird dazu verwendet, digitale Bildaufnahmen von dem Sammelbereich oder eines Teils davon zu erzeugen. Die erzeugten Bildaufnahmen können verwendet werden, (i) um zu erkennen, ob sich ein oder mehrere Gliederfüßer in dem abgebildeten Sammelbereich befinden (Detektieren von Gliederfüßern), (ii) die Position eines Gliederfüßers in der Bildaufnahme zu bestimmen (Lokalisieren von Gliederfüßern), (iii) Gliederfüßer in dem abgebildeten Sammelbereich zu zählen und/oder (iv) Gliederfüßer zu identifizieren, d.h. festzustellen, um welchen Gliederfüßer (z.B. Unterklasse, Überordnung, Ordnung, Unterordnung, Familie, Gattung, Art, Stadium, Nützling, Schädling) es sich handelt.

Der Sammelbereich ist ein Bereich, der von Gliederfüßern aufgesucht werden kann. Es kann sich dabei um eine ebene Oberfläche einer Tafel oder Karte oder dergleichen handeln. Es kann sich auch um den Boden eines Behälters handeln. Es kann sich auch um eine Flüssigkeit in einem Behälter handeln. Es kann sich auch um einen Teil einer Pflanze handeln, beispielsweise ein Blatt oder eine Frucht oder ein anderer Teil einer Pflanze.

Der Sammelbereich ist kein Bestandteil des IoT-Geräts, sondern davon unabhängig.

In einer Ausführungsform der vorliegenden Offenbarung ist der Sammelbereich ein Teil einer Fangvorrichtung für Gliederfüßer. Die Fangvorrichtung ist kein Bestandteil des IoT-Geräts, sondern davon unabhängig. In einer Ausführungsform der vorliegenden Offenbarung ist die Fangvorrichtung ein Bestandteil des Systems der vorliegenden Offenbarung zum Überwachen von Gliederfüßern.

In einer Ausführungsform der vorliegenden Offenbarung umfasst die Fangvorrichtung einen mit einer Flüssigkeit gefüllten Behälter, z.B. eine Fangschale, wie sie in WO2020/058175A1, WO2020/058170A1, WO2021/213824A1 oder WO2022/243150A1 beschrieben ist.

In einer Ausführungsform der vorliegenden Offenbarung umfasst die Fangvorrichtung eine mit einem Klebemittel versehene Oberfläche, wie sie in beispielsweise in WO2023/043871A1, WO2018/131853A1 oder WO2004/095919A2 beschrieben ist. Eine solche Fangvorrichtung wird in dieser Offenbarung auch als Klebefalle bezeichnet.

In einer Ausführungsform der vorliegenden Offenbarung umfasst die Fangvorrichtung einen zeltartigen Rahmen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen. Eine solche Fangvorrichtung ist ein spezieller Typ einer Klebefalle, da solche Delta-Fallen üblicherweise mit einer Karte oder Tafel, die mit einem Klebemittel ausgestattet ist, versehen wird. Dieser spezielle Typ ist dadurch gekennzeichnet, dass die mit dem Klebemittel ausgestattete Karte oder Tafel in ein Gehäuse eingebracht ist, um die Karte oder Tafel vor Umwelteinflüssen (z.B. Niederschlag, Verschmutzung, und ähnlichem) zu schützen. Ansonsten kann eine Klebefalle auch offen sein.

Als Lockmittel kann der Sammelbereich in einer Farbe gestaltet sein (z.B. gelb oder rot), die spezifische Gliederfüßer anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Im Falle der Verwendung eines mit einer Flüssigkeit gefüllten Behälters kann dieser mit Wasser und optional mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebemittel versehen sein, um Gliederfüßer bewegungsunfähig zu machen.

In einer Ausführungsform hat der Sammelbereich eine rechteckige Form, wobei die Ecken abgerundet sein können. In einer Ausführungsform entspricht das Seitenverhältnis des Sammelbereichs dem Bildformat (Seitenverhältnis, engl. *aspect ratio*) des in der Kamera verwendeten Bildsensors.

In einer Ausführungsform der vorliegenden Offenbarung hat der Sammelbereich eine Ausdehnung im Bereich von 100 mm x 200 mmm bis 200 mm x 250 mm.

In einer Ausführungsform der vorliegenden Offenbarung hat der Sammelbereich eine Ausdehnung im Bereich von 100 mm x 160 mmm bis 130 mm x 190 mm.

In einer Ausführungsform der vorliegenden Offenbarung hat der Sammelbereich eine Ausdehnung im Bereich von 160 mm x 210 mmm bis 180 mm x 230 mm.

In einer Ausführungsform der vorliegenden Offenbarung ist der Sammelbereich mit Mitteln zum Immobilisieren von Gliederfüßern ausgestattet. Dies kann eine Flüssigkeit sein. Dies kann ein Klebemittel sein. In einer Ausführungsform der vorliegenden Offenbarung ist der auf dem Bildsensor der Kamera abgebildete Bereich größer als der Sammelbereich. In einer Ausführungsform der vorliegenden Offenbarung ist der auf dem Bildsensor der Kamera abgebildete Bereich größer als der mit Mittel zum Immobilisieren von Gliederfüßern ausgestattete Sammelbereich. Mit anderen Worten: in einer Bildaufnahme des Sammelbereichs ist der gesamte Sammelbereich und ein Bereich um den Sammelbereich abgebildet.

In einer Ausführungsform der vorliegenden Offenbarung hat der von einem Bildsensor der Kamera erfasste Bereich eine Größe von 180 mm x 230 mm bis 200 mm x 250 mm.

In einer Ausführungsform der vorliegenden Offenbarung hat der von einem Bildsensor der Kamera erfasste Bereich eine Größe von 185 mm x 235 mm bis 195 mm x 245 mm.

In einer Ausführungsform der vorliegenden Offenbarung liegt die Fokussierentfernung im Bereich von 0,086 m bis 0,11 m. Die Fokussierentfernung ist der Abstand zwischen der Fokussierebene der Kamera und dem Motiv (z.B. einem Gliederfüßer im Sammelbereich).

In einer Ausführungsform der vorliegenden Offenbarung liegt die Schärfentiefe (engl. *depth of focus,* DOF) der Kamera im Bereich von 0,013 m bis 0,022 m. Die Schärfentiefe ist der Abstand zwischen dem nächstgelegenen und dem am weitesten entfernten Objekt, das in einer mit einer Kamera aufgenommenen Bildaufnahme scharf abgebildet wird.

In einer Ausführungsform der vorliegenden Offenbarung umfasst die Kamera einen Autofokus. In einer Ausführungsform der vorliegenden Offenbarung nutzt die Kamera beim Erzeugen einer Bildaufnahme von dem Sammelbereich den Autofokus.

Der Autofokus ist eine Funktion in einer Kamera, die das Kameraobjektiv automatisch auf ein Motiv fokussiert und so sicherstellt, dass es in den aufgenommenen Bildern scharf und klar ist. Es gibt mehrere Arten von Autofokussystemen, wie beispielsweise Phasendetektion und Kontrasterkennung. Die Gegenstände der vorliegenden Offenbarung sind nicht auf einen spezifischen Autofokus beschränkt.

In einer Ausführungsform der vorliegenden Offenbarung umfasst die Kamera eine Festbrennweite. In einer Ausführungsform der vorliegenden Offenbarung nutzt die Kamera beim Erzeugen einer Bildaufnahme von dem Sammelbereich eine Festbrennweite.

Bei einer Festbrennweite ist das Kameraobjektiv auf eine spezifische Fokussierungsdistanz voreingestellt und passt sich nicht an, um auf Objekte in verschiedenen Entfernungen zu fokussieren. Das bedeutet, dass die Kamera optimiert ist, um Objekte innerhalb eines bestimmten Bereichs scharf zu halten, ohne dass eine manuelle oder automatische Anpassung des Kameraobjektivs erforderlich ist.

In einer Ausführungsform der vorliegenden Offenbarung umfasst der Sammelbereich eine mit einem Klebemittel versehene ebene Oberfläche und die Kamera ist konfiguriert, auf die ebene Oberfläche zu fokussieren.

In einer Ausführungsform der vorliegenden Offenbarung wird der Sammelbereich durch eine mit einer Flüssigkeit gefüllten Fangschale gebildet und die Kamera ist konfiguriert, auf die Oberfläche der Flüssigkeit zu fokussieren.

In einer Ausführungsform der vorliegenden Offenbarung wird der Sammelbereich durch eine mit einer Flüssigkeit gefüllten Fangschale gebildet und die Kamera ist konfiguriert, auf den Boden der mit Flüssigkeit gefüllten Fangschale zu fokussieren.

In einer Ausführungsform der vorliegenden Offenbarung wird der Sammelbereich durch eine mit einer Flüssigkeit gefüllten Fangschale gebildet und die Kamera ist konfiguriert, auf eine Ebene zwischen der Oberfläche der Flüssigkeit und dem Boden der mit Flüssigkeit gefüllten Fangschale zu fokussieren. In einer Ausführungsform der vorliegenden Offenbarung entspricht der Abstand zwischen dem Boden der mit Flüssigkeit gefüllten Fangschale und der Ebene, auf die die Kamera fokussiert ist, dem Abstand zwischen der Ebene und der Oberfläche der Flüssigkeit oder weicht weniger als 50% oder 40% oder 30% davon ab.

In einer Ausführungsform hat der Bildsensor der Kamera eine Auflösung von mindestens 4000 x 3000 Pixeln.

Die hier genannten Ausführungsformen und Kombinationen davon sind besonders gut geeignet, um Gliederfüßern in einem abgebildeten Sammelbereich zu detektieren, zu lokalisieren, zu identifizieren und/oder zu zählen.

Zur Abbildung des Sammelbereichs auf einem oder mehreren Bildsensoren ist eine Lichtquelle erforderlich, mit der der Sammelbereich beleuchtet wird, so dass Licht (elektromagnetische Strahlung im infraroten, sichtbaren und/oder ultravioletten Bereich des elektromagnetischen Spektrums) vom beleuchteten Sammelbereich in Richtung Kamera gestreut/reflektiert wird. Hierzu kann das Tageslicht verwendet werden. Es ist aber auch denkbar, eine Beleuchtungseinheit zu verwenden, die für eine definierte, vom Tageslicht unabhängige Beleuchtung sorgt. Diese kann beispielsweise seitlich neben der Kamera angebracht sein, so dass es zu keinem Schattenwurf der Kamera auf den Sammelbereich kommt. Eine Beleuchtungseinheit ist eine Quelle für elektromagnetische Strahlung.

Es ist auch denkbar, eine Beleuchtungseinheit unterhalb des Sammelbereichs und/oder neben dem Sammelbereich zu positionieren, die den Sammelbereich "von unten" und/oder "von der Seite" beleuchtet, während eine Kamera eine oder mehrere Bildaufnahmen "von oben" erzeugt.

Es denkbar, dass mehrere Beleuchtungsquellen den Sammelbereich aus unterschiedlichen Richtungen beleuchten.

Die Begriffe "Licht" und "Beleuchtung" sollen im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) und/oder oberhalb von 780 nm (infrarotes Licht: 780 nm bis 1000 µm) verwendet wird. Der Bildsensor und die optischen Elemente der Kamera sind üblicherweise an die verwendete elektromagnetische Strahlung angepasst.

In einer Ausführungsform der vorliegenden Offenbarung umfasst das IoT-Gerät eine oder mehrere Beleuchtungsquellen.

In einer Ausführungsform der vorliegenden Offenbarung umfasst die Fangvorrichtung eine oder mehrere Beleuchtungsquellen.

In einer Ausführungsform der vorliegenden Offenbarung umfasst eine solche Beleuchtungsquelle - unabhängig davon, ob sie Bestandteil des IoT-Geräts oder Bestandteil der Fangvorrichtung ist - eine oder mehrere lichtemittierende Dioden (LED), auch als Leuchtdioden bezeichnet.

In einer Ausführungsform ist eine solche LED eine Blitz-LED. Eine Blitz-LED ist eine Leuchtdiode, die einen kurzen Lichtimpuls zur Beleuchtung von Motiven beim Erzeugen einer Bildaufnahme erzeugt.

In einer Ausführungsform der vorliegenden Offenbarung ist eine Blitz-LED oder sind mehrere Blitz-LED in Form eines Rings, eines Ringsegments oder mehrerer Ringsegmente ringförmig um das Objektiv der Kamera angeordnet.

In einer Ausführungsform der vorliegenden Offenbarung ist eine Blitz-LED oder sind mehrere Blitz-LED in Form eines Streifens oder mehrerer Streifen oberhalb, neben oder unterhalb des Objektivs der Kamera angeordnet.

In einer Ausführungsform der vorliegenden Offenbarung hat die Blitz-LED einen Lichtstrom (engl. *luminous flux*) von mindestens 150 Lumen.

In einer Ausführungsform der vorliegenden Offenbarung hat die Blitz-LED ein Sichtfeld (engl. *field of view,* FOV) von mindestens 110°.

In einer Ausführungsform der vorliegenden Offenbarung (i) umfasst der Sammelbereich eine mit einem Klebemittel versehene Oberfläche oder wird der Sammelbereich durch eine mit einer Flüssigkeit gefüllten Fangschale gebildet, (ii) ist die Kamera auf die mit Klebemittel versehene Oberfläche gerichtet oder auf den Boden der mit Flüssigkeit gefüllten Fangschale gerichtet, (iii) befindet sich eine Beleuchtungseinheit auf der der Oberfläche gegenüberliegenden Seite oder der dem Boden der mit Flüssigkeit gefüllten Fangschale gegenüberliegenden Seite und (iv) beleuchtet eben diese Seite (Beleuchtung "von unten"). Die mit Klebemittel versehene Oberfläche kann von einer Tafel oder Karte bereitgestellt werden. Die Tafel oder Karte oder der Boden der mit Flüssigkeit gefüllten Fangschale sind teilweise für die von der Beleuchtungseinheit ausgesandten elektromagnetischen Strahlung durchlässig, wobei der Transmissionsgrad weniger als 90% oder 80% oder 70% oder 60% oder 50% oder 40% oder 30% oder 20% oder 10% beträgt. Die Tafel oder Karte oder der Boden der mit Flüssigkeit gefüllten Fangschale sind so hergerichtet, dass sie die von der Beleuchtungseinheit ausgesandte elektromagnetische Strahlung zumindest teilweise streut und/oder beugt. Die Beleuchtung "von unten" sorgt für einen hohen Kontrast und lässt die Umrisse von Gliederfüßern in einer Bildaufnahme des Sammelbereichs besonders gut erkennen. In einer Ausführungsform ist zusätzlich zu der Beleuchtung "von unten" noch eine Beleuchtungseinheit auf der Seite der Kamera vorhanden, die den Sammelbereich und die darin befindlichen Gliederfüßer in einer Aufsicht ("von oben") beleuchtet, um neben dem hohen Kontrast auch für eine Abbildung von Strukturen und Farben bei den Gliederfüßern selbst zu sorgen.

In einer Ausführungsform der vorliegenden Offenbarung umfasst das IoT-Gerät ein Gehäuse. Das Gehäuse weist eine Öffnung auf, durch die vom Sammelbereich reflektierte und/oder gestreute und/oder gebeugte elektromagnetische Strahlung auf den Bildsensor der Kamera fällt, wobei die Öffnung parallel zum Bildsensor verläuft. In einer Ausführungsform der vorliegenden Offenbarung sind ein oder mehrere Blitz-LED in einer Ebene, die parallel zu der Öffnung und dem Bildsensor verläuft, angebracht. In einer Ausführungsform wird die Öffnung durch ein Fenster, das zumindest für einen Teil der vom Sammelbereich reflektierten und/oder gestreuten und/oder gebeugten elektromagnetischen Strahlung durchlässig ist, geschlossen, so dass keine Feuchtigkeit durch die Öffnung in das Innere des Gehäuses eintreten kann, und/oder ein Objektiv der Kamera schließt bündig an der Öffnung an. Es ist möglich, dass zwischen Gehäuse und Objektiv eine Dichtung eingebracht ist, um das Eintreten von Feuchtigkeit durch die Öffnung in das Innere des Gehäuses zu verhindern.

Das IoT-Gerät weist Mittel zur Energieversorgung auf. Das IoT-Gerät ist für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemische Zellen, Akkumulatoren, Solarzellen, Brennstoffzellen und/oder Generatoren (z.B. in Kombination mit einem Windrad).

Das IoT-Gerät kann so ausgestaltet sein, dass es elektrische Energie aus der Umgebung des IoT-Geräts gewinnt. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und durch das IoT-Gerät genutzt oder "geerntet" werden. Diese Art der elektrischen Energieerzeugung ist als Energy Harvesting bekannt. Mit "Energy Harvesting" werden im Bereich der Elektronik Verfahren bezeichnet, mit denen kleinste Mengen frei verfügbarer Energie aus der Umgebung gewonnen und gespeichert werden können. Diese Technik ermöglicht es, ein IoT-Gerät während seiner gesamten Lebensdauer mit Energie zu versorgen. Energy Harvesting Systeme umfassen üblicherweise einen Energiewandler, eine Energiemanagementeinheit mit einem Energiespeicher, der beispielsweise ein Kondensator sein kann. Der Energiewandler wandelt Energie aus der Umgebung in elektrische Energie um. Für die Umwandlung können beispielsweise der piezoelektrische Effekt, der thermoelektrische Effekt und/oder der photoelektrische Effekt genutzt werden. Weitere Details sind im Stand der Technik beschrieben (siehe z.B. http://www.harvesting-energy.de/ und die dort aufgeführten Publikationen).

In einer Ausführungsform umfasst das IoT-Gerät eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

In einer Ausführungsform der vorliegenden Offenbarung weist der Akkumulator eine Kapazität von mindestens 4000 mAh auf. In einer Ausführungsform der vorliegenden Offenbarung ist der Akkumulator ein Lithium-Ionen-Akkumulator.

In einer Ausführungsform der vorliegenden Offenbarung umfasst das IoT-Gerät ein Solarmodul, das eine oder mehrere Solarzellen umfasst. In einer Ausführungsform der vorliegenden Offenbarung ist eine Oberfläche des Solarmoduls (die der Sonne zugewandte Fläche) mit einer wasserabweisenden Beschichtung und/oder Struktur versehen. In einer Ausführungsform der vorliegenden Offenbarung sorgen eine hydrophobe Beschichtung und/oder eine Struktur, die einen Lotuseffekt erzeugt, dafür, dass Wasser die Oberfläche des Solarmoduls nicht benetzt, sondern zu einer Tropfenbildung führt.

In einer Ausführungsform der vorliegenden Offenbarung liefert das Solarmodul eine Spannung von mindestens 5 V.

In einer Ausführungsform der vorliegenden Offenbarung hat das Solarmodul eine Nennleistung von mindestens 1 Wp.

Das IoT-Gerät umfasst ein Gehäuse. Das Gehäuse schützt die elektrischen/elektronischen Komponenten vor Feuchtigkeit, Verschmutzung und/oder Sonnenlicht. Das Gehäuse sorgt dafür, dass keine Gliederfüßer und/oder andere Organismen in das Innere des Gehäuses gelangen.

Im Inneren des Gehäuses befinden sich beispielsweise die Kamera, die Steuereinheit, die Sendeeinheit (wobei eine oder mehrere Antennen der Sendeeinheit auch außerhalb des Gehäuses oder am Gehäuse angebracht sein können), die Energieversorgungseinheit, die Empfangseinheit (wenn vorhanden; wobei eine oder mehrere Antennen der Empfangseinheit auch außerhalb des Gehäuses oder am Gehäuse angebracht sein können) und/oder andere/weitere Komponenten.

In einer Ausführungsform der vorliegenden Offenbarung ist das Gehäuse quaderförmig.

In einer Ausführungsform der vorliegenden Offenbarung hat das Gehäuse die Form eines trapezförmigen Primas.

In einer Ausführungsform der vorliegenden Offenbarung hat das Gehäuse die Form von zwei aufeinandergestapelten trapezförmigen Primen, wobei die Primen an den jeweils größeren Grundflächen zusammentreffen.

In einer Ausführungsform der vorliegenden Offenbarung umfasst das Gehäuse zwei Grundflächen, wobei die Grundflächen diejenigen Flächen sind, die die maximale Größe aufweisen (jede andere Fläche des Gehäuses, die keine Grundfläche ist, ist kleiner als jede der Grundflächen). In einer Ausführungsform der vorliegenden Offenbarung verlaufen die Grundflächen parallel zueinander. In einer Ausführungsform der vorliegenden Offenbarung sind die Grundflächen rechteckig, wobei die Ecken abgerundet sein können. In einer Ausführungsform der vorliegenden Offenbarung haben die Grundflächen die Form von Rechtecken mit abgerundeten Ecken. In einer Ausführungsform der vorliegenden Offenbarung ist in eine der Grundflächen eine Aussparung (Öffnung) eingebracht, durch die vom Sammelbereich reflektierte/gestreute elektromagnetischen Strahlung auf den Bildsensor der Kamera treffen kann. In einer Ausführungsform der vorliegenden Offenbarung ist in eine der Grundflächen eine Aussparung (Öffnung) eingebracht, in der das Objekt der Kamera eingefasst ist. In einer Ausführungsform der vorliegenden Offenbarung weist die andere der Grundflächen eine zumindest teilweise um die Grundfläche herumlaufende Wandung auf und in das durch Grundfläche und Wandung eingeschlossene Volumen ist ein Solarmodul umfassend mindestens eine Solarzelle eingebracht. In einer Ausführungsform der vorliegenden Offenbarung ragt die Wandung über das Solarmodul hinaus. In einer Ausführungsform der vorliegenden Offenbarung verläuft die Wandung um die Grundfläche herum, bis auf mindestens eine Stelle, in der eine Aussparung eingebracht ist, damit Wasser (z.B. Regenwasser oder Tau), das sich auf dem Solarmodul ansammelt, durch die Aussparung von der Oberfläche des Solarmoduls kontrolliert in eine Richtung ablaufen kann. In einer Ausführungsform der vorliegenden Offenbarung ist die Oberfläche des Solarmoduls mit einer wasserabweisenden Beschichtung versehen. Die wasserabweisende Beschichtung kann dafür sorgen, dass sich Wassertropfen bilden, die von der Oberfläche des Solarmoduls abperlen und/oder vom Wind von der Oberfläche geblasen werden. In einer Ausführungsform der vorliegenden Offenbarung ist die Aussparung in dem System der vorliegenden Offenbarung so ausgerichtet, das Wasser (z.B. Regenasser oder Tau), das durch die Aussparung läuft, nicht in den Sammelbereich gelangt.

In einer Ausführungsform der vorliegenden Offenbarung umfasst das Gehäuse zwei Grundflächen, die an gegenüberliegenden Seiten des Gehäuses angebracht sind, wobei eine Grundfläche ein Solarmodul umfasst und in die andere Grundfläche eine Aussparung (Öffnung) eingebracht ist, durch die vom Sammelbereich reflektierte/gestreute/gebeugte elektromagnetischen Strahlung auf den Bildsensor der Kamera treffen kann. In einer Ausführungsform der vorliegenden Offenbarung ist das IoT-Gerät in einem System so mit einer Fangvorrichtung verbunden, dass sich der Sammelbereich unterhalb der Kamera befindet (die Kamera also nach "unten" in Richtung der Schwerkraft gerichtet ist) und sich das Solarmodul auf der der Kamera gegenüberliegenden Seite des IoT-Geräts befindet und nach "oben" gerichtet ist (um durch Sonnenlicht beschienen werden zu können).

In einer Ausführungsform der vorliegenden Offenbarung ragt eine Grundfläche des Gehäuses zumindest an zwei gegenüberliegenden Seiten über die Seitenflächen des Gehäuses, die an diese Seiten angrenzen, hinaus, so dass auf jeder Seite ein Vorsprung in Form eine Schiene gebildet wird, wobei die Schienen parallel zueinander verlaufen.

In einer Ausführungsform der vorliegenden Offenbarung ragt eine Grundfläche des Gehäuses zumindest an zwei gegenüberliegenden Seiten und optional an einer Seite, die die gegenüberliegenden Seiten miteinander verbindet, über die Seitenflächen des Gehäuses, die an diese Seiten angrenzen, hinaus, so dass auf jeder Seite ein Vorsprung in Form eine Schiene gebildet wird, wobei zwei Schienen parallel zueinander verlaufen.

In einer Ausführungsform der vorliegenden Offenbarung ragt eine Grundfläche des Gehäuses an allen vier Seiten, über die Seitenflächen des Gehäuses, die an diese Seiten angrenzen, hinaus, so dass auf jeder Seite ein Vorsprung in Form eine Schiene gebildet wird. Mit anderen Worten: es ist ein Vorsprung vorhanden, der bündig mit der Grundfläche abschließt und um die Grundfläche herumführt. Der um die Grundfläche herumführende Vorsprung bildet vier Schienen, wobei jeweils zwei Schienen parallel zueinander verlaufen.

Zwei oder mehr der Schienen können verwendet werden, um das IoT-Gerät reversibel mit einer Fangvorrichtung zu verbinden.

In einer Ausführungsform der vorliegenden Offenbarung umfasst die Fangvorrichtung Führungen zur Aufnahme der beschriebenen Schienen.

In einer Ausführungsform der vorliegenden Offenbarung umfasst das System der vorliegenden Offenbarung einen Verbindungsmittler, wobei der Verbindungsmittler sowohl reversibel mit dem IoT-Gerät verbunden werden kann als auch reversibel mit der Fangvorrichtung verbunden werden kann und so eine Verbindung zwischen dem IoT-Gerät und der Fangvorrichtung bereitstellt, vermittelt und/oder herstellt.

In einer Ausführungsform der vorliegenden Offenbarung umfasst der Verbindungsmittler Führungen zur Aufnahme der beschriebenen Schienen.

In einer Ausführungsform der vorliegenden Offenbarung umfassen das IoT-Gerät, der Verbindungsmittler und/oder die Fangvorrichtung ein oder mehrere Rastelemente, die einrasten, wenn die Schienen des IoT-Geräts in die Führungen eingeschoben werden, und das IoT-Gerät so in den Führungen fixieren. Ist ein solches Rastelement ein Bestandteil des IoT-Geräts, dann umfasst die Fangvorrichtung und/oder der Verbindungsmittler eine Aussparung, in die das Rastelement eingreifen und einrasten kann. Ist ein solches Rastelement ein Bestandteil der Fangvorrichtung und/oder des Verbindungsmittler, dann ist die Aussparung ein Bestandteil des IoT-Geräts. In einer Ausführungsform weist das Rastelement eine Erhebung auf. Wird das IoT-Gerät mit den Schienen in die Führungen eingeschoben, wird ein Federelement durch die Erhebung unter Federspannung ausgelenkt. Beim weiteren Einschieben des IoT-Geräts gelangt die Erhebung in eine Aussparung und die Federspannung wird aufgehoben: das Rastelement rastet ein.

In einer Ausführungsform umfasst das IoT-Gerät eine oder mehrere Statusanzeigen. Eine solche Statusanzeige kann durch eine LED gebildet werden. In einer Ausführungsform wird eine solche Statusanzeige durch ein E-Ink-Element oder ein E-Ink-Display gebildet. In einer Ausführungsform wird eine solche Statusanzeige durch ein E-Ink-Element oder ein E-Ink-Display gebildet, das Energie nur bei einer Änderung der Anzeige verbraucht.

In einer Ausführungsform zeigt ein solches E-Ink-Element/-Display an, wann der Status letztmalig abgefragt wurde und/oder den zuletzt abgefragten Status permanent an.

Eine Statusanzeige kann den Ladezustand eines Akkumulators anzeigen. Eine Statusanzeige kann anzeigen, ob das IoT-Gerät über eine Netzwerkverbindung (z.B. eine Mobilfunkverbindung) mit einer Basisstation verbunden ist. Eine Statusanzeige kann die Signalstärke der Basisstation anzeigen. Eine Statusanzeige kann anzeigen, ob ein Fehler vorliegt. Eine Statusanzeige kann anzeigen, welcher Fehler vorliegt. Eine Statusanzeige kann anzeigen, wann das System und/oder einzelne Komponenten des Systems zuletzt gewartet wurden. Eine Statusanzeige kann anzeigen, wann die Fangvorrichtung zuletzt gereinigt wurde. Eine Statusanzeige kann anzeigen, zu welchem Zeitpunkt der aktuell angezeigte Status festgestellt wurde.

In einer Ausführungsform umfasst die Statusanzeige mindestens einen Schalter. In einer Ausführungsform ist die Statusanzeige konfiguriert, einen Status bei Betätigen des Schalters anzuzeigen. In einer Ausführungsform ist der Schalter als ein Druckknopf ausgeführt und die Statusanzeige zeigt einen Status nur, solange der Druckknopf gedrückt ist; beim Loslassen des Druckknopfs erlischt die Statusanzeige.

In einer Ausführungsform umfasst das IoT-Gerät einen Schalter, mit dem das IoT-Gerät in Betrieb genommen wird. Das IoT-Gerät kann konfiguriert sein, nach Inbetriebnahme des Status zur prüfen und den Status über die Statusanzeige anzuzeigen. Das IoT-Gerät kann konfiguriert sein, den Status für eine begrenzte Zeit anzuzeigen, beispielsweise für 3 Sekunden oder 5 Sekunden oder 10 Sekunden oder für eine Zeitspanne länger als 10 Sekunden.

In einer Ausführungsform zeigt die Statusanzeige an, inwieweit der Akkumulator zur Energieversorgung des IoT-Geräts aufgeladen ist. Eine solche Ladestatusanzeige kann den Ladezustand in Form von diskreten Elementen anzeigen, wobei jedes Element an- und ausgeschaltet werden kann und die Zahl der angeschalteten Elemente mit der Menge an elektrischer Energie korreliert, die von dem Akkumulator zur Verfügung gestellt werden kann. Ist der Akkumulator beispielsweise entladen, kann es sein, dass alle vorhandenen Elemente ausgeschaltet werden. Ist der Akkumulator beispielsweise voll geladen, kann es sein, dass alle vorhandenen Elemente eingeschaltet werden. Die Zahl der Elemente kann beispielsweise 3, 4, 5, 6, 7, 8 oder mehr als 8 betragen. Vorzugsweise beträgt sie 3, 4 oder 5.

In einer Ausführungsform zeigt die Statusanzeige an, ob das IoT-Gerät mit einem Mobilfunknetz verbunden ist und/oder die Signalstärke der Basisstation, mit der das IoT-Gerät verbunden ist, an. Eine solche Verbindungstatusanzeige kann die Signalstärke in Form von diskreten Elementen anzeigen, wobei jedes Element an- und ausgeschaltet werden kann und die Zahl der angeschalteten Elemente mit der Signalstärke korreliert. Ist das IoT-Gerät nicht mit einer Basisstation verbunden, kann es sein, dass alle vorhandenen Elemente ausgeschaltet werden. Ist die Signalstärke maximal, kann es sein, dass alle vorhandenen Elemente eingeschaltet werden. Die Zahl der Elemente kann beispielsweise 3, 4, 5, 6, 7, 8 oder mehr als 8 betragen. Vorzugsweise beträgt sie 3, 4 oder 5.

In einer Ausführungsform weist das IoT-Gerät einen elektrischen Anschluss auf, über den das IoT-Gerät mit einer externen Quelle für elektrische Energie verbunden werden kann. Über eine solche externe Quelle für elektrische Energie kann das IoT-Gerät beispielsweise mit elektrischer Energie für den Betrieb des IoT-Geräts versorgt werden. Über eine solche externe Quelle für elektrische Energie kann der Akkumulator des IoT-Geräts aufgeladen werden. Der elektrische Anschluss kann z.B. Teil eines USB-Anschlusses (USB: Universal Serial Bus), beispielsweise eines USB-C-Anschlusses sein.

Das IoT-Gerät umfasst eine Sendeeinheit, um Informationen über ein Netzwerk an ein separates Computersystem zu übermitteln. Diese Informationen können beispielsweise Bildaufnahmen des Sammelbereichs sein. Diese Informationen können Ergebnisse einer Analyse einer Bildaufnahme sein, zum Beispiel die Zahl der in einer Bildaufnahme abgebildeten Gliederfüßer, identifizierte Spezies, Anzahl der Spezies und/oder Mitteilungen zum Status des IoT-Geräts.

Die Sendeeinheit kann so ausgestaltet sein, dass sie Informationen über ein Mobilfunknetz (z.B. GSM: *Global System for Mobile Communications,* GPRS: *General Packet Radio Service;* UMTS: *Universal Mobile Telecommunications System,* LTE: *Long Term Evolution*), über ein WLAN *(Wireless Local Artea Network*), über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Das IoT-Gerät kann eine Empfangseinheit umfassen, um Informationen über ein Netzwerk zu empfangen. Diese Informationen können Softwareupdates, Statusabfragen und/oder andere/weitere Informationen sein.

Die Empfangseinheit kann so ausgestaltet sein, dass sie Informationen über ein Mobilfunknetz empfängt.

Die Sendeeinheit und die Empfangseinheit können Bestandteile einer Sende- und Empfangseinheit sein.

In einer Ausführungsform der vorliegenden Offenbarung umfasst das IoT-Gerät eine Sende- und Empfangseinheit, mit der Informationen über ein GSM-, GPRS-, 2G-, 3G-, LTE-, 4G-, 5G-, 6G-Mobilfunknetzwerk oder über ein anderes Mobilfunknetzwerk empfangen und versendet werden können.

Das IoT-Gerät umfasst ferner eine Steuereinheit.

Die Steuereinheit dient der Steuerung der elektrischen/elektronischen Komponenten des IoT-Geräts und zur Koordinierung der Datenflüsse zwischen verschiedenen Komponenten des IoT-Geräts.

Die Steuereinheit umfasst üblicherweise eine Prozessoreinheit, einen Programmspeicher und einen Arbeitsspeicher. Die Steuereinheit kann ferner einen nicht-flüchtigen Datenspeicher umfassen, der beispielsweise als Halbleiterspeicher ausgeführt ist, und der zum Beispiel zum Speichern von Bildaufnahmen, Messwerten, Analysemodellen, Computerprogrammen (Software) und/oder von Ergebnissen von Analysen dienen kann.

Die Steuereinheit kann konfiguriert sein, mit Hilfe eines GPS-Empfängers die Position des IoT-Geräts zu bestimmen. Der GPS-Empfänger kann ein Bestandteil des IoT-Geräts sein und/oder eine separate Einheit sein. Der GPS-Empfänger kann sich im Inneren des Gehäuses befinden (wobei eine oder mehrere Antennen des GPS-Empfängers außerhalb des Gehäuses und/oder am Gehäuse angebracht sein können).

Ein GPS-Empfänger (GPS: Globales Positionsbestimmungssystem) ist Teil eines Satellitennavigationssystems zur Positionsbestimmung. Ein Satellitennavigationssystem basiert auf Satelliten, die mit kodierten Radiosignalen fortwährend ihre aktuelle Position und die genaue Uhrzeit ausstrahlen. Aus den Signallaufzeiten kann ein Empfänger (in dieser Beschreibung als der GPS-Empfänger bezeichnet) seine eigene Position und Geschwindigkeit berechnen. Bekannte Satellitennavigationssysteme sind beispielsweise NAVSTAR GPS, GLONASS, Galileo oder Beidou. Da sich die Abkürzung GPS (Globales Positionsbestimmungssystem) in der Umgangssprache als generische Bezeichnung für alle Satellitennavigationssysteme etabliert hat, wird in dieser Beschreibung der Begriff GPS als Sammelbezeichnung für alle Positionsbestimmungssysteme verwendet. Der Begriff "GPS-Empfänger" soll also nicht limitierend im Hinblick auf das GPS-Satellitennavigationssystem verstanden werden; er soll auch Empfänger anderer Satellitennavigationssysteme umfassen.

Die Position des IoT-Geräts kann ferner aus der (Mobil-)Funkzelle, in der sich das IoT-Gerät befindet, abgeleitet werden. Im Mobilfunk beruht die einfachste Art der Standortbestimmung darauf, dass die Zelle, in der sich eine Sendeeinheit befindet, bekannt ist. Da beispielsweise ein eingeschaltetes Mobilfunktelefon mit einer Basisstation in Verbindung steht, lässt sich die Position des Mobilfunktelefons zumindest einer Mobilfunkzelle (Cell-ID) zuweisen. Analog kann die Position des IoT-Geräts umfassend eine Sendeeinheit mit der Mobilfunkzelle gleichgesetzt werden, mit der die Sendeeinheit verbunden ist. Mit Hilfe von GSM (Global System for Mobile Communications) kann der Standort einer Sendeeinheit auf mehrere hundert Meter genau bestimmt werden. In Städten kann der Standort auf 100 bis 500 m genau bestimmt werden; in ländlichen Gegenden erhöht sich der Radius auf 10 km oder mehr. Wird die Information über die Cell-ID mit dem TA-Parameter (TA: Timing Advance) kombiniert, dann kann die Genauigkeit erhöht werden. Je höher dieser Wert ist, desto weiter weg ist die Sendeeinheit von der Basisstation. Mit dem EOTD-Verfahren (EOTD: Enhanced Observed Time Difference) lässt sich eine Sendeeinheit noch genauer orten. Dabei werden die Laufzeitunterschiede der Signale zwischen der Sendeinheit und mehreren Empfangseinheiten bestimmt.

Weitere Möglichkeiten der Positionsbestimmung sind im Stand der Technik beschrieben (siehe z.B. DE10029137A1, DE102010041548A1, DE102012214203A1, DE102015121384A1, DE102016225886A1, US2015119086A1).

Die Steuereinheit kann konfiguriert sein, mit Hilfe der Kamera Bildaufnahmen vom Sammelbereich zu erzeugen. Die Steuereinheit kann konfiguriert sein, die Kamera zu veranlassen, eine Bildaufnahmen vom Sammelbereich zu erzeugen. Die Steuereinheit kann konfiguriert sein, die Kamera zu definierten Zeitpunkten und/oder in definierten Zeitabständen und/oder bei Eintreten definierter Ereignisse zu veranlassen, eine Bildaufnahmen vom Sammelbereich zu erzeugen. Die Steuereinheit kann konfiguriert sein, Bildaufnahmen, Messwerte, Analysenergebnisse, Geokoordinaten und/oder andere Informationen mit Hilfe der Sendeeinheit an ein separates Computersystem zu übermitteln. Die Steuereinheit kann konfiguriert sein, Bildaufnahmen von der Kamera zu empfangen und/oder Bildaufnahmen von der Kamera abzurufen und/oder Bildaufnahmen aus einem Datenspeicher, der ein Bestandteil der Vorrichtung sein kann, auszulesen. Die Steuereinheit kann konfiguriert sein, mit Hilfe der Empfangseinheit Daten und/oder Befehle und/oder Softwareupdates zu empfangen.

Die Steuereinheit kann konfiguriert sein, in Bildaufnahmen abgebildete Gliederfüßer zu detektieren, zu lokalisieren, zu zählen und/oder zu identifizieren. Dies kann z.B. mit Hilfe eines trainierten Modells des maschinellen Lernens erfolgen. Ein solches Modell des maschinellen Lernens kann konfiguriert und trainiert sein, in Bildaufnahmen abgebildete Gliederfüßer zu detektieren, zu lokalisieren, zu zählen und/oder zu identifizieren. Details zum automatisierten Detektieren, Lokalisieren, Zählen und/oder Identifizieren von Gliederfüßer in Bildaufnahmen sind in Veröffentlichungen zu diesem Thema beschrieben (siehe z.B.: D. C. K. Amarathunga et al.: Methods of Insect Image Capture and Classification: A Systematic Literature Review, Smart Agricultural Technology, Volume 1, 2021, 100023; C. Zhu et al.: Insect Identification and Counting in Stored Grain: Image Processing Approach and Application Embedded in Smartphones, Mob. Inf. Syst. 2018, 5491706:1-5, WO2020058175A1, WO2020058170A1).

In einer Ausführungsform der vorliegenden Offenbarung ist die Steuereinheit konfiguriert, zwischen mindestens zwei Zuständen zu wechseln, einem Ruhezustand (engl. *sleep mode*) und einem Aktivzustand (engl. *active mode* oder *fully operational mode*).

Der "Ruhezustand" kann ein Zustand mit geringerer Leistungsaufnahme (im Vergleich zum Aktivzustand) sein, in den die Vorrichtung versetzt werden kann, um Energie zu sparen. Es ist möglich, dass das IoT-Gerät im Ruhezustand in der Lage ist, bei Eintreten eines definierten Ereignisses wieder den vollen Betrieb aufzunehmen. Es ist möglich, dass das IoT-Gerät im Ruhezustand seine Funktionen anhält und den Stromverbrauch verschiedener Komponenten wie Prozessor, GPS-Empfänger, Kamera, Statusanzeigen, Beleuchtung und anderer ggf. vorhandener Peripheriegeräte und/oder Bestandteile reduziert.

Der "Ruhezustand" kann ein Zustand sein, in dem das IoT-Gerät keine Energie verbraucht. Das IoT-Gerät kann in dem Ruhezustand ausgeschaltet sein. Es ist möglich, dass das IoT-Gerät erst durch ein manuelles Einschalten wieder in einen Betriebszustand (z.B. den Aktivzustand) versetzt werden kann.

Der Begriff "Aktivzustand" bezieht sich auf den Betriebszustand, in dem das IoT-Gerät alle Aufgaben gemäß seiner Konfiguration zum Überwachen von Gliederfüßern ausführt. Dazu gehört beispielsweise das Erzeugen von Bildaufnahmen des Sammelbereichs. Dazu kann das Speichern und/oder Übermitteln von Bildaufnahmen und/oder anderen Informationen an ein separates Computersystem zählen. Dazu kann das Analysieren von Bildaufnahmen zählen. Eine solche Analyse kann das Erkennen, Lokalisieren, Identifizieren und/oder Zählen von Gliederfüßern in den Bildaufnahmen umfassen.

In einer Ausführungsform der vorliegenden Offenbarung ist die Steuereinheit konfiguriert, das IoT-Gerät zu definierten Zeitpunkten und/oder in definierten Zeitabständen und/oder bei Eintreten definierter Ereignisse aus einem Ruhezustand in den Aktivzustand zu versetzen, die Kamera zu veranlassen, eine Bildaufnahme des Sammelbereichs zu erzeugen, die Bildaufnahme zu komprimieren, und die Sendeeinheit zu veranlassen, die komprimierte Bildaufnahme über eine Netzwerkverbindung (z.B. zumindest anteilig über ein Mobilfunknetz) an ein separates Computersystem zu übermitteln, und das IoT-Gerät anschließend aus dem Aktivzustand wieder in den Ruhezustand zu versetzen.

In einer Ausführungsform der vorliegenden Offenbarung ist die Steuereinheit konfiguriert, das IoT-Gerät zu definierten Zeitpunkten und/oder in definierten Zeitabständen und/oder bei Eintreten definierter Ereignisse aus einem Ruhezustand in den Aktivzustand zu versetzen, zu prüfen, ob eine Netzwerkverbindung aufgebaut werden kann, und in Reaktion auf die wiederholte Feststellung, dass keine Netzwerkverbindung aufgebaut werden kann, das IoT-Gerät auszuschalten, wobei die wiederholte Feststellung bedeuten kann, dass n-mal in Folge keine Netzwerkverbindung aufgebaut werden konnte, wobei n eine ganze Zahl größer als 1 ist (z.B. 2, 3, 4, 5, 6, 7, 8, 9 oder 10 oder mehr als 10). Zwischen zwei Versuchen kann eine Zeitspanne von Minuten, Stunden und/oder Tagen liegen. Zwischen zwei Versuchen kann das IoT-Gerät von dem Aktivzustand in den Ruhezustand versetzt werden.

In einer Ausführungsform der vorliegenden Offenbarung ist die Steuereinheit konfiguriert, das IoT-Gerät zu definierten Zeitpunkten und/oder in definierten Zeitabständen und/oder bei Eintreten definierter Ereignisse aus einem Ruhezustand in den Aktivzustand zu versetzen, die Sende- und Empfangseinheit zu veranlassen, eine Anfrage über eine Netzwerkverbindung (z.B. zumindest anteilig über ein Mobilfunknetz) an ein separates Computersystem zu übermitteln, wobei die Anfrage der Feststellung dient, ob ein Softwareupdate vorliegt. Die Steuereinheit kann konfiguriert sein, die Sende- und Empfangseinheit zu veranlassen, von dem separaten Computersystem eine Antwort auf die Anfrage zu empfangen, in Reaktion auf die Feststellung, dass ein Softwareupdate vorliegt, die Sende- und Empfangseinheit zu veranlassen, das Softwareupdate zu empfangen, das Softwareupdate zu installieren, zu prüfen, ob das Softwareupdate korrekt installiert wurde, und das IoT-Gerät von dem Aktivzustand in den Ruhezustand zu versetzen.

In einer Ausführungsform der vorliegenden Offenbarung ist die Steuereinheit konfiguriert, zu prüfen, ob ein Softwareupdate korrekt installiert wurde, und in Reaktion auf eine Feststellung, dass ein Softwareupdate nicht korrekt installiert wurde, eine frühere Version der Software (z.B. die dem Softwareupdate vorangegangene Version der Software) zu installieren.

In einer Ausführungsform der vorliegenden Offenbarung umfasst das IoT-Gerät eine eindeutige Kennung. In einer Ausführungsform der vorliegenden Offenbarung ist die eindeutige Kennung in Form eines optisch lesbaren Codes auf dem Gehäuse des IoT-Geräts aufgebracht. Der Code kann aufgedruckt und/oder aufgeklebt und/oder eingraviert und/oder aufgestempelt und/oder mittels eines Lasers und/oder auf eine andere Weise in das Gehäuse aufgebracht und/oder in das Gehäuse eingebracht sein.

Der optisch lesbare Code kann ein Barcode und/oder ein 2D Code (z.B. ein QR-Code oder ein Data Matrix Code) sein.

In einer Ausführungsform der vorliegenden Offenbarung umfasst der optisch lesbare Code einen Link zu einer Internetseite. Ein Nutzer kann den optisch lesbaren Code mit einer Kamera eines mobilen Computersystems (z.B. ein Smartphone oder ein Tablet-Computer) erfassen. Der optisch lesbare Code leitet den Nutzer über den Link auf die Internetseite, wo der Nutzer das IoT-Gerät registrieren und/oder konfigurieren kann.

Ein weiterer Gegenstand der vorliegenden Offenbarung ist ein System.

Das System umfasst ein IoT-Gerät und eine oder mehrere Fangvorrichtungen für Gliederfüßer. Ein solche Fangvorrichtung kann eine Fangschale sein oder umfassen. Eine solche Fangschale kann eine Fangschale sein, wie sie in WO2020/058175A1, WO2020/058170A1, WO2021/213824A1 und/oder WO2022/243150A1 beschrieben ist, deren Inhalt durch diese Bezugnahme vollständig in diese Offenbarung aufgenommen sein soll.

Eine solche Fangvorrichtung kann eine mit einem Klebemittel versehene Oberfläche umfassen, wie sie in beispielsweise in WO2023/043871A1, WO2018/131853A1 oder WO2004/095919A2 beschrieben ist.

Eine solche Fangvorrichtung kann einen zeltartigen Rahmen umfassen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen.

Wie beschrieben weist das IoT-Gerät Mittel zum reversiblen mechanischen Verbinden des IoT-Geräts mit der Fangvorrichtung auf. Dementsprechend weist auch die Fangvorrichtung kompatible Mittel zum reversiblen Verbinden der Fangvorrichtung mit dem IoT-Gerät auf.

In einer Ausführungsform ist das IoT-Gerät so ausgeführt, dass es mit verschiedenen Fangvorrichtungen reversibel verbunden werden kann. In einer Ausführungsform ist das IoT-Gerät so ausgeführt, dass es Verbindungselemente aufweist, die kompatibel zu Verbindungselementen einer Fangschale und einer Klebefalle sind, während die Fangschale und die Klebefalle Verbindungselemente aufweisen, die kompatibel zu den Verbindungselementen des IoT-Geräts sind. In einer Ausführungsform sind die Verbindungselemente der Fangschale und der Klebefalle identisch.

"Kompatibel" bedeutet, dass die Verbindungselemente des IoT-Geräts mit den Verbindungselementen der Fangschale und der Klebefalle reversibel verbunden werden können, so dass bei einer solchen Verbindung das IoT-Gerät und die Fangschale oder das IoT-Gerät und die Klebefalle ein System zum Überwachen von Gliederfüßern bilden. In einem solchen System ist das IoT-Gerät in definierter Form in Bezug auf den Sammelbereich der jeweiligen Fangvorrichtung ausgerichtet, so dass ein Abbild des Sammelbereichs auf einen Bildsensor der Kamera des IoT-Geräts fällt.

Wird das IoT-Gerät mit einer Fangvorrichtung verbunden, sorgen die Verbindungselemente des IoT-Geräts und der Fangvorrichtung dafür, dass die Kamera automatisch so in Bezug zum Sammelbereich ausgerichtet wird, dass der Sammelbereich auf einem Bildsensor der Kamera abgebildet wird.

Es ist möglich, dass das IoT-Gerät nicht direkt mit der Fangvorrichtung verbunden wird, sondern ein Verbindungsmittler eine mechanische Verbindung zwischen dem IoT-Gerät und der Fangvorrichtung herstellt. Mit anderen Worten: das IoT-Gerät und die Fangvorrichtung werden jeweils mit dem Verbindungsmittler verbunden und sind so indirekt (über den Verbindungsmittler) miteinander verbunden.

In einer Ausführungsform ist die Fangvorrichtung als eine Fangschale ausgestaltet, die ein Gitter zum Schutz der in der Fangschale befindlichen Flüssigkeit vor Schmutz aufweist (siehe z.B. WO2020/058170A1). In einer Ausführungsform kann ein solches Gitter (insbesondere zum Reinigen der Fangvorrichtung) abgenommen werden. In einer Ausführungsform umfasst der Verbindungsmittler und/oder die Fangvorrichtung Befestigungsmittel zum Befestigen des Gitters im Falle einer Reinigung der Fangvorrichtung. Ein solches Befestigungsmittel kann beispielsweise ein Haken sein, der z.B. zum Greifen in eine Aussparung des Gitters ausgestaltet ist.

Gemäß dem Gegenstand des Anspruchs 1 ist das IoT-Gerät konfiguriert zu erkennen, mit welcher Fangvorrichtung es verbunden ist. In einer Ausführungsform ist das IoT-Gerät konfiguriert zu erkennen, ob es mit einer Klebefalle oder einer mit Flüssigkeit gefüllten Fangschale verbunden ist. In einer Ausführungsform ist das IoT-Gerät konfiguriert zu erkennen, in welcher Farbe der Sammelbereich gestaltet ist und/oder wie große der Sammelbereich ist und/oder welche Form der Sammelbereich aufweist und/oder ob ein Lockmittel vorhanden ist.

In einer Ausführungsform ist das IoT-Gerät konfiguriert, sich anhand von Anwendungsinformationen zu konfigurieren.

Die Anwendungsinformationen können ganz oder teilweise von einem Nutzer spezifiziert werden.

Die Anwendungsinformationen können ganz oder teilweise automatisch ermittelt werden. "Automatisch" bedeutet ohne Zutun eines Menschen. Es ist möglich, dass das IoT-Gerät konfiguriert ist zu erkennen, welche Fangvorrichtung vorliegt. Es ist zum Beispiel möglich, dass Fangvorrichtung und IoT-Gerät zwei separate Einheiten sind, die miteinander mechanisch verbunden werden können, um ein System zum Überwachen von Gliederfüßern zu bilden. Es ist möglich, dass die Fangvorrichtung und das IoT-Gerät über Verbindungsmittel verfügen, die eine solche mechanische Verbindung ermöglichen. Es ist möglich, dass die Verbindungsmittel elektrische Kontakte aufweisen. Es ist möglich, dass bei einer mechanischen Verbindung des IoT-Geräts mit einer Fangvorrichtung ein elektrischer Kontakt zwischen dem IoT-Gerät und der Fangvorrichtung hergestellt wird. Es ist möglich, dass das IoT-Gerät konfiguriert ist, mittels des elektrischen Kontakts zu erkennen, mit welcher Art von Fangvorrichtung das IoT-Gerät verbunden ist.

Für eine solche Erkennung gibt es zahlreiche Möglichkeiten.

Bei der Widerstandcodierung haben verschiedene Arten von Fangvorrichtungen verschiedene elektrische Widerstände. Das IoT-Gerät misst als Erkennungskomponente den Widerstand, um festzustellen, mit welcher Fangvorrichtung es verbunden ist.

An den elektrischen Kontakten verschiedener Fangvorrichtungen können Kondensatoren mit unterschiedlichen Kapazitätswerten angeschlossen sein. Beim Anschließen misst das IoT-Gerät die Kapazität, ähnlich wie bei der Widerstandscodierungsmethode, um die Fangvorrichtung zu identifizieren.

Durch die Gestaltung der mechanischen Verbindung mit einer eindeutigen Konfiguration von Pins und/oder Kontakten (z.B. unterschiedliche Anzahl von Pins, unterschiedliche Pin-Anordnungen und/oder Verwendung von Pins unterschiedlicher Länge) kann das IoT-Gerät den Typ der angeschlossenen Fangvorrichtung anhand der Pins, die Kontakt herstellen, bestimmen.

Es ist auch möglich, dass Fangvorrichtungen einen RFID-Transponder umfassen (RFID: *radiofrequency identification*). Der RFID-Transponder kann aktiv sein (d.h. eine Quelle für elektrische Energie umfassen). In einer Ausführungsform der vorliegenden Offenbarung ist der RFID-Transponder passiv, d.h. er besitzt keine eigene Quelle für elektrische Energie, sondern wird über Induktion von dem IoT-Gerät mit elektrischer Energie versorgt. Das IoT-Gerät kann konfiguriert sein, zu vordefinierten Zeitpunkten und/oder in vordefinierten Zeitabständen und/oder bei Eintreten definierter Ereignisse den RFID-Transponder auszulesen und damit festzustellen, um welche Fangvorrichtung es sich handelt. Die Art der Fangvorrichtung kann in einem Datenspeicher des RFID-Transponders als Information gespeichert sein.

Ebenso ist es möglich, dass das IoT-Gerät und die Fangvorrichtung in verbundenem Zustand über digitale Kommunikationsprotokolle, wie beispielsweise I2C, SPI oder UART, Daten austauschen. Dabei kein eine Komponente (z.B. die Fangvorrichtung) einen eindeutigen Identifizierungscode an die andere Komponente (z.B. das IoT-Gerät) senden.

Ebenso ist es möglich, ein optisches Erkennungssystem zu integrieren. Wenn die Komponenten verbunden werden, kann ein optischer Marker (z.B. ein QR-Code oder Barcode) auf der Fangvorrichtung von einem optischen Sensor des IoT-Geräts (z.B. der Kamera) gelesen werden. Der optische Marker kann z.B. in dem Sammelbereich angebracht sein.

Anhand der automatisch ermittelten Anwendungsinformationen kann das IoT-Gerät sich selbst konfigurieren. Ebenso ist es möglich, dass das IoT-Gerät konfiguriert ist, die automatisch ermittelten Anwendungsinformationen an ein separates Computersystem zu übermitteln, das die Konfiguration des IoT-Geräts vornimmt.

Die Farbe und/oder Form und/oder Größe des Sammelbereichs kann aus einer Bildaufnahme des Sammelbereichs automatisch bestimmt werden. Das IoT-Gerät kann konfiguriert sein, eine erste Bildaufnahme von dem Sammelbereich zu erzeugen. Das IoT-Gerät kann beispielsweise konfiguriert sein, eine solche erste Bildaufnahme dann zu erzeugen, wenn das IoT-Gerät mit einer Fangvorrichtung verbunden wurde und/oder erstmalig eingeschaltet wurde. Das IoT-Gerät kann konfiguriert sein, die erste Bildaufnahme zu analysieren und die Farbe und/oder Form und/oder Größe des Sammelbereichs zu ermitteln. Das IoT-Gerät kann konfiguriert sein, sich selbst automatisch anhand der Farbe und/oder Form und/oder Größe des Sammelbereichs zu konfigurieren. Das IoT-Gerät kann konfiguriert sein, die erste Bildaufnahme und/oder die automatisch ermittelten Anwendungsinformationen an ein separates Computersystem zu übermitteln. Das separate Computersystem kann konfiguriert sein, die erste Bildaufnahme zu analysieren, um die Farbe und/oder Form und/oder Größe des Sammelbereichs zu ermitteln. Das separate Computersystem kann konfiguriert sein, das IoT-Gerät auf Basis der übermittelten Anwendungsinformationen und/oder der ermittelten Anwendungsinformationen zu konfigurieren.

Ebenso ist es möglich, dass die Farbe und/oder Form und/oder Größe des Sammelbereichs spezifisch für die Fangvorrichtung ist und aus der Farbe und/oder Form und/oder Größe des Sammelbereichs weitere Informationen abgeleitet werden können, wie beispielsweise um welche Art Fangvorrichtung es sich handelt, in welchem Bereich sie verwendet wird, für welche Gliederfüßer sie gedacht ist und/oder für welche Nutzpflanzen sie üblicherweise eingesetzt wird.

Ebenso ist es möglich, dass sich bei Verwendung eines Lockmittels (z.B. Pheromon) ein solches Lockmittel im Sammelbereich und/oder oberhalb des Sammelbereichs und/oder unterhalb des Sammelbereichs und/oder unmittelbarer Nähe des Sammelbereichs platziert wird, so dass es in der ersten Bildaufnahme erkennbar ist. Die Information über die Anwesenheit und/oder Nicht-Anwesenheit des Lockmittels (z.B. in Form einer Kapsel oder eines Gels oder einer Beschichtung oder dergleichen) in der Bildaufnahme kann zur Konfiguration des IoT-Geräts verwendet werden.

Ebenso ist es möglich, dass die Position des IoT-Geräts automatisch ermittelt wird. Aus der Position (z.B. in Form von Geokoordinaten) des IoT-Geräts kann ggf. abgeleitet werden, in welchem Bereich das IoT-Gerät verwendet wird, welche Nutzpflanzen in dem Bereich angebaut werden und/oder mit welchen Gliederfüßern in dem Bereich zu rechnen ist.

Das IoT-Gerät kann konfiguriert sein, mit Hilfe eines GPS-Empfängers die Position zu bestimmen. Der GPS-Empfänger kann ein Bestandteil des IoT-Geräts sein und/oder eine separate Einheit sein.

Die Position des IoT-Geräts kann ferner aus der (Mobil-)Funkzelle, in der sich das IoT-Gerät befindet, abgeleitet werden.

Eine weitere automatisch ermittelte Anwendungsinformation kann das Datum und/oder die Jahreszeit sein. Die Zeit kann, allein oder in Kombination mit den Geokoordinaten, Auskunft darüber geben, welche Gliederfüßer zu erwarten sind und/oder in welchem Entwicklungstand sie sich befinden.

Die Konfiguration des IoT-Geräts kann einen oder mehrere der folgenden Schritte umfassen:
- Auswählen eines oder mehrerer Modelle zum Detektieren, Lokalisieren, Identifizieren und/oder Zählen von Gliederfüßern in Bildaufnahmen des Sammelbereichs,
- Festlegen, wann und/oder wie häufig die Kamera des IoT-Geräts Bildaufnahmen vom Sammelbereich erzeugt,
- Festlegen der Auflösung der Bildaufnahmen,
- Festlegen, ob und/oder wie der Sammelbereich beleuchtet wird,
- Festlegen, welcher Spektralbereich zum Beleuchten des Sammelbereichs verwendet wird,
- Festlegen, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden,
- Festlegen eines Wartungs- und/oder Reinigungsintervalls,
- Festlegen einer Fokussierung/Fokussierungsart,
- Festlegen von Kameraparametern wie beispielsweise Belichtungszeit, Blende, ISO-Wert,Weißabgleich, Belichtungskorrektur, Bildformat, Motivmodus und/oder Bildstabilisator.

Ist das IoT-Gerät mit einer Fangvorrichtung verbunden und konfiguriert, kann es in Betrieb genommen werden. Das IoT-Gerät kann im Betrieb konfiguriert sein, zu definierten Zeiten und/oder in definierten Zeitabständen und/oder bei Eintreten definierter Ereignisse
(i) Bildaufnahmen vom Sammelbereich gemäß der Konfiguration zu erzeugen,
(ii) Bildaufnahmen gemäß der Konfiguration zu analysieren,
(iii) Gliederfüßer in den Bildaufnahmen gemäß der Konfiguration zu detektieren, zu lokalisieren, zu identifizieren und/oder zu zählen, und/oder
(iv) Bildaufnahmen und/oder Analyseergebnisse und/oder Mitteilungen zur Wartung und/oder Reinigung gemäß der Konfiguration an ein separates Computersystem zu übermitteln.

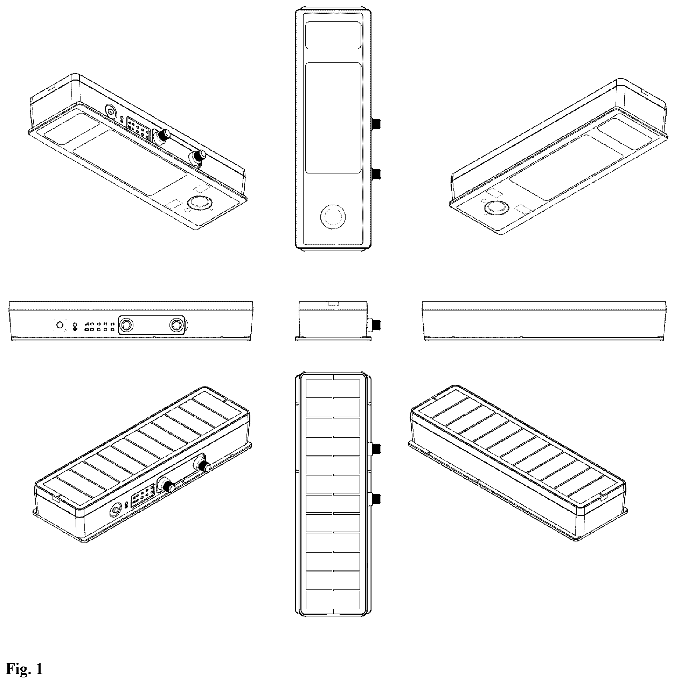

Fig. 1 zeigt eine Ausführungsform des IoT-Geräts aus verschiedenen Perspektiven.

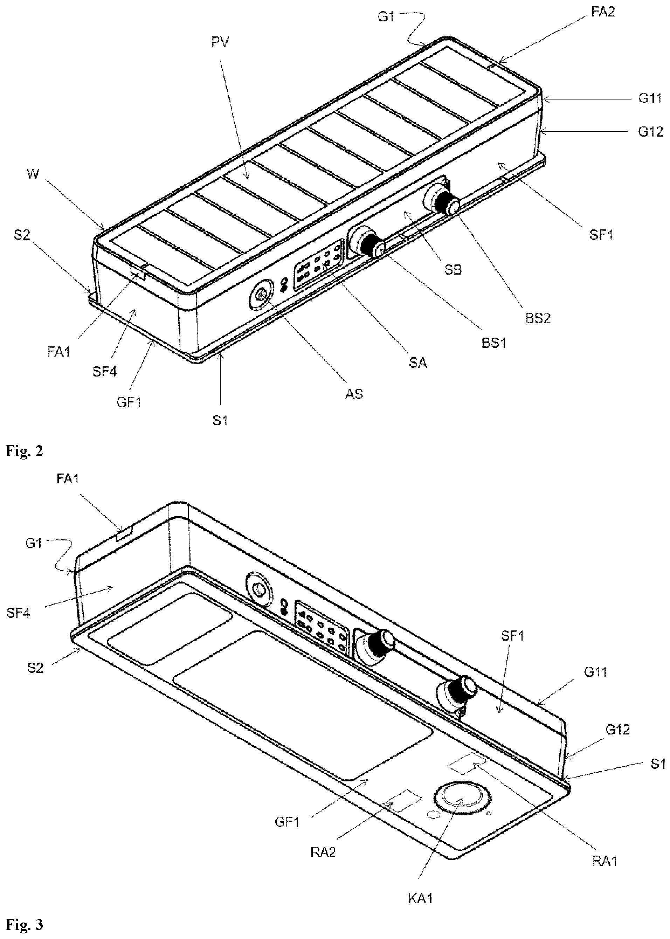

Fig. 2 zeigt eine vergrößerte Darstellung des IoT-Geräts aus Fig. 1 aus einer der Perspektiven.

Fig. 3 zeigt eine vergrößerte Darstellung des IoT-Geräts aus Fig. 1 aus einer anderen der in Fig. 1 gezeigten Perspektiven.

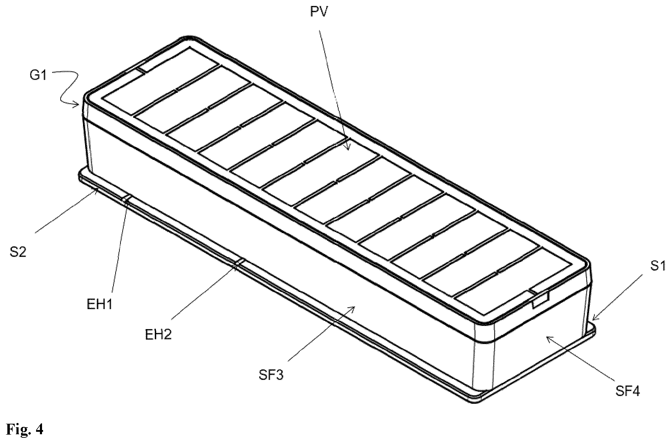

Fig. 4 zeigt eine vergrößerte Darstellung des IoT-Geräts aus Fig. 1 aus einer weiteren der in Fig. 1 gezeigten Perspektiven.

Das IoT-Gerät umfasst ein Gehäuse G1. Das Gehäuse ist aus zwei Teilen zusammengesetzt, einem Oberteil G11 und einem Unterteil G12. Das Oberteil G11 umfasst ein Solarmodul PV mit mehreren Solarzellen.

Das Gehäuse G1 umfasst zwei Grundflächen. Eine untere Grundfläche GF1 wird von dem Unterteil G12 bereitgestellt; eine obere Grundfläche wird durch das Oberteil G11 bereitgestellt und ist in Fig. 2, Fig. 3 und Fig. 4 nicht zu erkennen, da es sich unterhalb des Solarmoduls PV befindet. Neben den Grundflächen weist das Gehäuse G1 vier Seitenflächen auf, von denen in Fig. 2 und Fig. 3 die Seitenflächen SF1 und SF4 zu erkennen sind, und in Fig. 4 die Seitenflächen SF 3 und SF4 zu erkennen sind.

Die Grundflächen verlaufen parallel zueinander. Die Grundflächen sind rechteckig, wobei die Ecken abgerundet sind.

Die obere Grundfläche umfasst eine abschnittsweise um die obere Grundfläche herumlaufende Wandung W. In das durch die obere Grundfläche und Wandung W eingeschlossene Volumen ist das Solarmodul PV eingebracht. Die Wandung W ragt über das Solarmodul PV hinaus.

In die Wandung W sind zwei Aussparungen FA1 und FA2 eingebracht, über die Wasser (z.B. Regenwasser oder Tau), das sich auf dem Solarmodul ansammelt, kontrolliert ablaufen kann.

In die untere Grundfläche GF1 ist eine Aussparung KA1 eingebracht, durch die (z.B. vom Sammelbereich reflektierte/gestreute/gebeugte elektromagnetischen Strahlung) auf einen Bildsensor der Kamera treffen kann. Die Kamera befindet sich innerhalb des Gehäuses G1 und ist in Fig. 2, Fig. 3 und Fig. 4 nicht zu erkennen. In die Aussparung KA1 ist das Objekt der Kamera eingefasst.

Die untere Grundfläche GF1 ragt an den zwei gegenüberliegenden Seitenflächen SF1 und SF3 über die Seitenflächen des Gehäuses G1 hinaus, so dass auf jeder Seite ein Vorsprung in Form eine Schiene gebildet wird. Die in Fig. 2, 3 und 4 zu erkennenden Schienen S1 und S2 verlaufen laufen parallel zueinander.

Diese Schienen S1 und S2 können verwendet werden, um das IoT-Gerät reversibel mit einer Fangvorrichtung zu verbinden.

Die Schienen weisen Erhöhungen EH1 und EH2 auf. Diese Erhöhungen können zum Verankern (Einrasten) des IoT-Geräts in Führungen der Fangvorrichtung oder eines Verbindungsmittlers verwendet werden.

In das Gehäuse des IoT-Geräts sind Vertiefungen RA1 und RA2 eingebracht. In diese Vertiefungen RA1 und RA2 können Rastelemente der Fangvorrichtung oder des Verbindungsmittlers eingreifen.

Das IoT-Gerät umfasst einen Schalter AS zum Ein- und Ausschalten des IoT-Geräts.

Das IoT-Gerät umfasst eine Statusanzeige SA. Die Statusanzeige SA umfasst zwei Reihen von LED, eine obere Reihe und eine untere Reihe. Jede Reihe umfasst vier LED. Die obere Reihe zeigt die Signalstärke der Basisstation, mit der das IoT-Gerät verbunden ist, an. Je mehr LED eingeschaltet sind, desto stärker ist das Signal. Die untere Reihe zeigt den Ladezustand des Akkumulators an. Je mehr LED eingeschaltet sind, desto mehr elektrische Energie kann der Akkumulator bereitstellen.

Das IoT-Gerät umfasst eine Schutzblende SB. Die Schutzblende SB ist mit Hilfe von zwei Befestigungsschrauben BS1, BS2 am Gehäuse befestigt. Hinter der Schutzblende SB befinden sich Komponenten, die durch die Schutzblende SB vor Spritzwasser, Niederschlag, Feuchtigkeit, Schutz und/oder dergleichen geschützt sind. Hinter der Schutzblende SB kann sich beispielsweise ein Anschluss befinden, über den das IoT-Gerät mit einer externen Quelle für elektrische Energie versorgt werden kann.

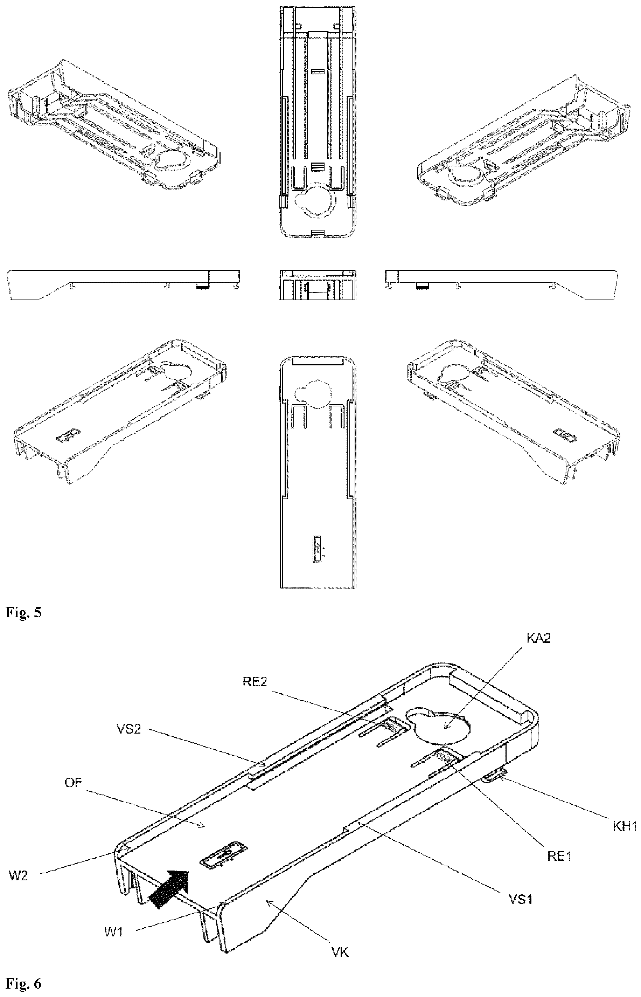

Fig. 5 zeigt eine Ausführungsform eines Verbindungsmittlers aus verschiedenen Perspektiven.

Fig. 6 zeigt eine vergrößerte Darstellung des Verbindungsmittlers aus Fig. 5 aus einer der Perspektiven.

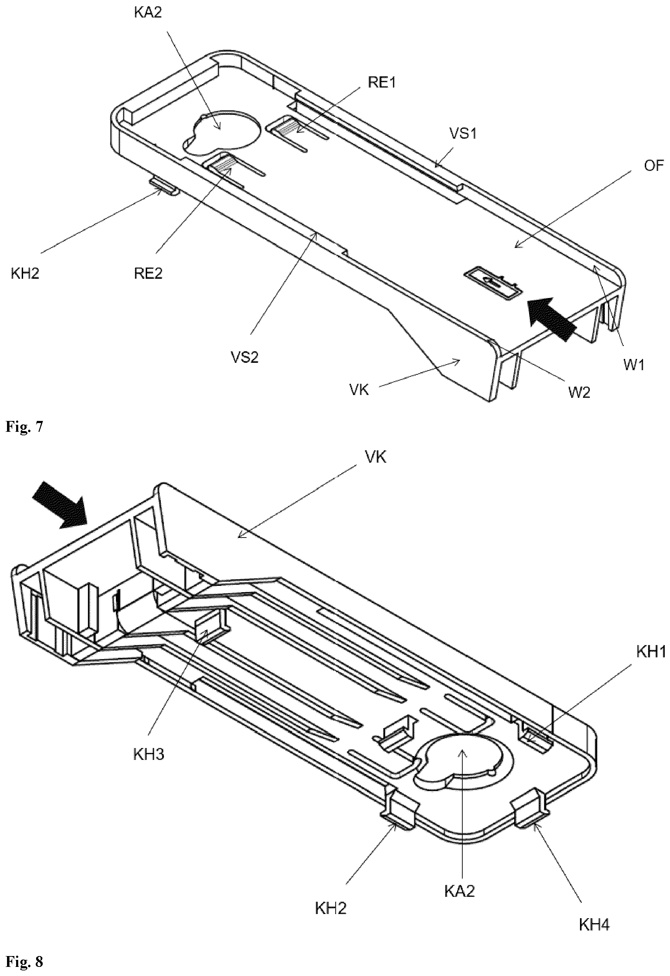

Fig. 7 zeigt eine vergrößerte Darstellung des Verbindungsmittlers aus Fig. 5 aus einer anderen der in Fig. 5 gezeigten Perspektiven.

Fig. 8 zeigt eine vergrößerte Darstellung des Verbindungsmittlers aus Fig. 5 aus einer weiteren der in Fig. 5 gezeigten Perspektiven.

Der Verbindungsmittler umfasst einen Körper VK. In den Körper VK des Verbindungsmittlers ist eine Aussparung KA2 eingebracht, durch die (z.B. vom Sammelbereich reflektierte/gestreute/gebeugte elektromagnetischen Strahlung) auf einen Bildsensor der Kamera des IoT-Geräts treffen kann. Wird das IoT-Gerät mit dem Verbindungsmittler mechanisch verbunden, kommt die Aussparung K1 des IoT-Geräts mit der Aussparung KA2 des Verbindungsmittlers zur Deckung.

Der schwarze dicke Pfeil in Fig. 5, Fig. 6 und Fig. 7 zeigt die Richtung an, entlang der das IoT-Gerät in den Verbindungsmittler eingeschoben wird, um das IoT-Gerät mit dem Verbindungsmittler mechanisch zu verbinden.

Der Körper VK des Verbindungsmittlers umfasst zwei Wandungen W1 und W2 entlang der das IoT-Gerät in den Verbindungsmittler eingeschoben wird. Dabei wirken die Wandungen W1 und D2 als seitliche Begrenzungen, die das IoT-Gerät beim Einschieben führen. Im mittleren Bereich des Körpers VK weisen die Wandungen W1 und W2 zwei Vorsprünge VS1 und VS2 auf, die eine weitere Führung des IoT-Geräts beim Einschieben in den Verbindungsmittler bewirken. Dabei wirken die Vorsprünge VS1 und VS2 als weitere Begrenzungen (Begrenzungen nach oben). Beim Einschieben des IoT-Geräts in den Verbindungsmittler umfassen die Wandungen W1 und W2 zusammen mit den Vorsprüngen VS1 und VS2 die Schienen S1 und S2 des IoT-Geräts: Wandung W1 zusammen mit dem Vorsprung VS1 umfasst die Schiene S1; Wandung W2 zusammen mit dem Vorsprung VS2 umfasst die Schiene S2. Das IoT-Gerät wird so weit in den Verbindungsmittler eingeschoben, bis die Rastelemente RE1 und RE2 des Verbindungsmittlers in die Aussparungen eingreifen und einrasten. Das IoT-Gerät wird formschlüssig durch die Wandungen W1 und W2, die Vorsprünge VS1 und VS2, die Oberfläche OF des Verbindungsmittlers und die Rastelemente RE1 und RE2 in dem Verbindungsmittler fixiert. Die Rastelemente RE1 und RE2 können ferner eine Federkraft auf das IoT-Gerät ausüben, indem sie die Schienen S1 und S2 gegen die Vorsprünge CS1 und VS2 drücken. Die Rastelemente RE1 und RE2 weisen eine Erhebung auf. Wird das IoT-Gerät in den Verbindungsmittler eingeschoben, drückt das IoT-Gerät mit der Unterseite gegen die Erhebungen der Rastelemente RE1 und RE2 und lenkt die Rastelemente RE1 und RE2 nach unten aus. Dabei wirkt eine Federspannung, die die Rastelemente RE1 und RE2 gegen die Unterseite des IoT-Geräts drücken. Wird das IoT-Gerät so weit in den Verbindungsmittler eingeschoben, dass die Erhebungen die Aussparungen RA1 und RA2 einreichen, drückt die Federkraft die Rastelemente RE1 und RE2 in die Aussparungen RA1 und RA2 und fixiert das IoT-Gerät in dem Verbindungsmittler.

Das IoT-Gerät kann als ein Computersystem bezeichnet werden.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Statusanzeigen, Eingabemittel, Kamera etc. Auch interne Anschlüsse und Erweiterungskarten gelten in der Computertechnik als Peripherie.

Der Begriff "verarbeiten", wie er oben verwendet wird, soll jede Art von Berechnung oder Manipulation oder Umwandlung von Daten umfassen, die als physikalische, z.B. elektronische, Phänomene dargestellt werden und z.B. in Registern und/oder Speichern mindestens eines Computers oder Prozessors auftreten oder gespeichert werden können. Der Begriff "Prozessor" umfasst eine einzelne Verarbeitungseinheit oder eine Vielzahl verteilter oder entfernter solcher Einheiten.

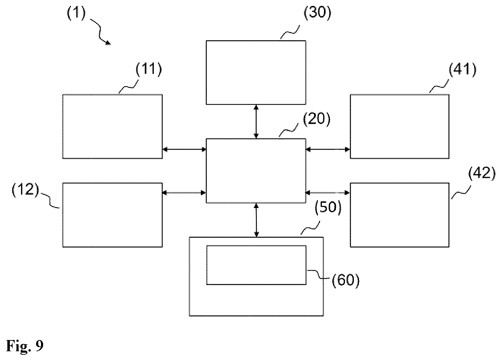

Fig. 9 zeigt beispielhaft und schematisch eine Ausführungsform des IoT-Geräts der vorliegenden Offenbarung.

Das IoT-Gerät (1) umfasst eine Verarbeitungseinheit (20) (engl. *processing unit*) und einen Speicher (50).

Die Verarbeitungseinheit (20) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die im Speicher (50) gespeichert sein können.

Der Speicher (50) kann eine gewöhnliche Computerhardware sein, die in der Lage ist, Informationen wie z.B. digitale Bildaufnahmen, Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher oder eine Kombination der oben genannten.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Kamera, anderen Computersystemen, Netzwerken, Datenspeichern oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) (z.B. eine Statusanzeige) umfassen. Eine Anzeige (30) kann so konfiguriert sein, dass sie einem Benutzer Informationen anzeigt. Geeignete Beispiele hierfür sind eine Leuchtdioden (LED), E-Ink-Displays oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

## Patentansprüche

1. IoT-Gerät (1) zum Überwachen von Gliederfüßern umfassend
- eine Kamera,
- eine Sendeeinheit,
- eine Steuereinheit,
- eine Energieversorgungseinheit und
- Mittel zum reversiblen Verbinden des IoT-Geräts (1) mit einer Fangvorrichtung für Gliederfüßer,
**dadurch gekennzeichnet, dass** das IoT-Gerät (1) konfiguriert ist zu erkennen, mit welcher Art von Fangvorrichtung es verbunden ist.

2. IoT-Gerät (1) gemäß der Anspruch 1, wobei die Fangvorrichtung einen Sammelbereich für Gliederfüßer bereitstellt, wobei die Kamera konfiguriert ist, Bildaufnahmen von dem Sammelbereich für Gliederfüßer zu erzeugen.

3. IoT-Gerät (1) gemäß Anspruch 1 oder Anspruch 2, wobei das IoT-Gerät (1) konfiguriert ist zu erkennen, ob es mit einer Klebefalle oder einer mit Flüssigkeit gefüllten Fangschale verbunden ist.

4. IoT-Gerät (1) gemäß einem der Ansprüche 1 bis 3, wobei das IoT-Gerät (1) konfiguriert ist zu erkennen, in welcher Farbe der Sammelbereich gestaltet ist und/oder wie große der Sammelbereich ist und/oder welche Form der Sammelbereich aufweist und/oder ob ein Lockmittel vorhanden ist.

5. IoT-Gerät (1) gemäß Anspruch 1, wobei die Mittel zum reversiblen Verbinden des IoT-Geräts (1) mit der Fangvorrichtung elektrische Kontakte umfassen, die eine elektrische Verbindung zur Fangvorrichtung herstellen.

6. IoT-Gerät (1) gemäß Anspruch 5, wobei das IoT-Gerät (1) als Erkennungskomponente einen Widerstand misst, um festzustellen, mit welcher Fangvorrichtung es verbunden ist.

7. IoT-Gerät (1) gemäß Anspruch 5, wobei das IoT-Gerät (1) eine Kapazität misst, um die Fangvorrichtung zu identifizieren.

8. IoT-Gerät (1) gemäß Anspruch 5, wobei das IoT-Gerät (1) anhand von Pins an der Fangvorrichtung, die elektrischen Kontakt zum IoT-Gerät (1) herstellen, den Typ der angeschlossenen Fangvorrichtung bestimmt .

9. IoT-Gerät (1) gemäß Anspruch 1, wobei das IoT-Gerät (1) konfiguriert ist, einen Datenspeicher eines RFID-Transponders der Fangvorrichtung auszulesen und die Art der Fangvorrichtung anhand der in dem Datenspeicher gespeicherten Informationen zu bestimmen.

10. System zum Überwachen von Gliederfüßern umfassend
- eine Fangvorrichtung umfassend einen Sammelbereich für Gliederfüßer und
- ein IoT-Gerät (1) gemäß einem der Ansprüche 1 bis 9.

11. System gemäß Anspruch 10, wobei die Mittel zum reversiblen Verbinden des IoT-Geräts (1) mit der Fangvorrichtung elektrische Kontakte umfassen, die eine elektrische Verbindung zur Fangvorrichtung herstellen, wobei das IoT-Gerät (1) konfiguriert ist, mittels der elektrischen Verbindung zu erkennen, mit welcher Art von Fangvorrichtung das IoT-Gerät (1) verbunden ist, wobei das IoT-Gerät (1) konfiguriert ist, sich selbst auf Basis der erkannten Art der Fangvorrichtung zu konfigurieren, wobei das Konfigurieren des IoT-Geräts (1) umfasst:
- Auswählen eines oder mehrerer Modelle zum Detektieren, Lokalisieren, Identifizieren und/oder Zählen von Gliederfüßern in Bildaufnahmen des Sammelbereichs und/oder
- Festlegen, wann und/oder wie häufig die Kamera des IoT-Geräts (1) Bildaufnahmen vom Sammelbereich erzeugt, und/oder
- Festlegen der Auflösung der Bildaufnahmen und/oder
- Festlegen, ob und/oder wie der Sammelbereich beleuchtet wird, und/oder
- Festlegen, welcher Spektralbereich zum Beleuchten des Sammelbereichs verwendet wird, und/oder
- Festlegen, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden, und/oder
- Festlegen eines Wartungs- und/oder Reinigungsintervalls und/oder
- Festlegen einer Fokussierung/Fokussierungsart und/oder
- Festlegen von Kameraparametern wie beispielsweise Belichtungszeit, Blende, ISO-Wert, Weißabgleich, Belichtungskorrektur, Bildformat, Motivmodus und/oder Bildstabilisator.

12. Verfahren umfassend die Schritte:
- Bereitstellen einer Fangvorrichtung für Gliederfüßer umfassend einen Sammelbereich,
- Bereitstellen eines IoT-Geräts (1) gemäß einer der Ausführungsformen 1 bis 9,
- Verbinden des IoT-Geräts (1) mit der Fangvorrichtung, wobei die Kamera beim Verbinden automatisch so gegenüber dem Sammelbereich ausgerichtet wird, dass zumindest ein Teil des Sammelbereichs auf einem Bildsensor der Kamera abgebildet wird,
- Erzeugen einer Bildaufnahme des Sammelbereichs,
- Speichern der Bildaufnahme und/oder Übermitteln der Bildaufnahme und/oder von Informationen betreffend die Bildaufnahme an ein separates Computersystem.

13. Verfahren gemäß Anspruch 12, wobei beim Verbinden des IoT-Geräts (1) mit der Fangvorrichtung eine elektrische Verbindung zwischen dem IoT-Gerät (1) und der Fangvorrichtung hergestellt wird, wobei das IoT-Gerät (1) konfiguriert ist, über die elektrische Verbindung die Art der Fangvorrichtung, mit der das IoT-Gerät (1) verbunden ist, zu erkennen, wobei das Verfahren ferner umfasst:
- Konfigurieren des IoT-Geräts (1) anhand der Art der mit dem IoT-Gerät (1) verbundenen Fangvorrichtung.

14. Verfahren gemäß Anspruch 13, wobei das IoT-Gerät (1) konfiguriert ist, sich selbst auf Basis der erkannten Art der Fangvorrichtung zu konfigurieren, wobei das Konfigurieren des IoT-Geräts (1) umfasst:
- Auswählen eines oder mehrerer Modelle zum Detektieren, Lokalisieren, Identifizieren und/oder Zählen von Gliederfüßern in Bildaufnahmen des Sammelbereichs und/oder
- Festlegen, wann und/oder wie häufig die Kamera des IoT-Geräts (1) Bildaufnahmen vom Sammelbereich erzeugt, und/oder
- Festlegen der Auflösung der Bildaufnahmen und/oder
- Festlegen, ob und/oder wie der Sammelbereich beleuchtet wird, und/oder
- Festlegen, welcher Spektralbereich zum Beleuchten des Sammelbereichs verwendet wird, und/oder
- Festlegen, ob eine Beleuchtungseinheit bei der Erzeugung von Bildaufnahmen eingeschaltet wird, welche Beleuchtungseinheit eingeschaltet wird, wann eine oder mehrere Beleuchtungseinheit(en) eingeschaltet wird/werden, und zu welchen Zeitpunkten und/oder in welchen Zeitabständen eine oder mehrere Beleuchtungseinheit(en) eingeschaltet wird/werden, und/oder
- Festlegen eines Wartungs- und/oder Reinigungsintervalls und/oder
- Festlegen einer Fokussierung/Fokussierungsart und/oder
- Festlegen von Kameraparametern wie beispielsweise Belichtungszeit, Blende, ISO-Wert, Weißabgleich, Belichtungskorrektur, Bildformat, Motivmodus und/oder Bildstabilisator.

## Claims

1. IoT device (1) for monitoring arthropods, comprising:
• a camera,
• a transmitting unit,
• a control unit,
• an energy supply unit, and
• means for reversibly connecting the IoT device (1) to a trapping device for arthropods,
**characterized in that** the IoT device (1) is configured to recognize which type of trapping device it is connected to.

2. IoT device (1) according to claim 1, wherein the trapping device provides a collection area for arthropods, wherein the camera is configured to generate images of the collection area for arthropods.

3. IoT device (1) according to claim 1 or claim 2, wherein the IoT device (1) is configured to recognize whether it is connected to an adhesive trap or to a catch bowl filled with liquid.

4. IoT device (1) according to any one of claims 1 to 3, wherein the IoT device (1) is configured to recognize in which color the collection area is designed and/or how large the collection area is and/or which shape the collection area has and/or whether an attractant is present.

5. IoT device (1) according to claim 1, wherein the means for reversibly connecting the IoT device (1) to the trapping device comprise electrical contacts that establish an electrical connection to the trapping device.

6. IoT device (1) according to claim 5, wherein the IoT device (1), as a recognition component, measures a resistance in order to determine which trapping device it is connected to.

7. IoT device (1) according to claim 5, wherein the IoT device (1) measures a capacitance in order to identify the trapping device.

8. IoT device (1) according to claim 5, wherein the IoT device (1) determines the type of the connected trapping device on the basis of pins on the trapping device that establish electrical contact with the IoT device (1).

9. IoT device (1) according to claim 1, wherein the IoT device (1) is configured to read out a data memory of an RFID transponder of the trapping device and to determine the type of the trapping device on the basis of the information stored in the data memory.

10. System for monitoring arthropods, comprising:
• a trapping device comprising a collection area for arthropods, and
• an IoT device (1) according to any one of claims 1 to 9.

11. System according to claim 10, wherein the means for reversibly connecting the IoT device (1) to the trapping device comprise electrical contacts that establish an electrical connection to the trapping device, wherein the IoT device (1) is configured to recognize, by means of the electrical connection, which type of trapping device the IoT device (1) is connected to, wherein the IoT device (1) is configured to configure itself on the basis of the recognized type of trapping device, wherein configuring the IoT device (1) comprises:
• selecting one or more models for detecting, localizing, identifying and/or counting arthropods in images of the collection area, and/or
• determining when and/or how frequently the camera of the IoT device (1) generates images of the collection area, and/or
• determining the resolution of the images, and/or
• determining whether and/or how the collection area is illuminated, and/or
• determining which spectral range is used for illuminating the collection area, and/or
• determining whether an illumination unit is switched on during the generation of images, which illumination unit is switched on, when one or more illumination unit(s) is/are switched on, and at which points in time and/or at which time intervals one or more illumination unit(s) is/are switched on, and/or
• determining a maintenance and/or cleaning interval, and/or
• determining a focusing/type of focusing, and/or
• determining camera parameters such as exposure time, aperture, ISO value, white balance, exposure correction, image format, scene mode and/or image stabilizer.

12. Method comprising the steps of:
• providing a trapping device for arthropods comprising a collection area,
• providing an IoT device (1) according to any one of claims 1 to 9,
• connecting the IoT device (1) to the trapping device, wherein upon connecting the camera is automatically aligned with respect to the collection area such that at least a part of the collection area is imaged on an image sensor of the camera,
• generating an image of the collection area,
• storing the image and/or transmitting the image and/or information relating to the image to a separate computer system.

13. Method according to claim 12, wherein upon connecting the IoT device (1) to the trapping device an electrical connection is established between the IoT device (1) and the trapping device, wherein the IoT device (1) is configured to recognize, via the electrical connection, the type of the trapping device to which the IoT device (1) is connected, wherein the method further comprises:
• configuring the IoT device (1) on the basis of the type of the trapping device connected to the IoT device (1).

14. Method according to claim 13, wherein the IoT device (1) is configured to configure itself on the basis of the recognized type of trapping device, wherein configuring the IoT device (1) comprises:
• selecting one or more models for detecting, localizing, identifying and/or counting arthropods in images of the collection area, and/or
• determining when and/or how frequently the camera of the IoT device (1) generates images of the collection area, and/or
• determining the resolution of the images, and/or
• determining whether and/or how the collection area is illuminated, and/or
• determining which spectral range is used for illuminating the collection area, and/or
• determining whether an illumination unit is switched on during the generation of images, which illumination unit is switched on, when one or more illumination unit(s) is/are switched on, and at which points in time and/or at which time intervals one or more illumination unit(s) is/are switched on, and/or
• determining a maintenance and/or cleaning interval, and/or
• determining a focusing/type of focusing, and/or
• determining camera parameters such as exposure time, aperture, ISO value, white balance, exposure correction, image format, scene mode and/or image stabilizer.

## Revendications

1. Dispositif IoT (1) pour la surveillance d'arthropodes, comprenant :
• une caméra,
• une unité d'émission,
• une unité de commande,
• une unité d'alimentation en énergie, et
• des moyens de liaison réversible du dispositif IoT (1) avec un dispositif de piégeage pour arthropodes,
**caractérisé en ce que** le dispositif IoT (1) est configuré pour reconnaître avec quel type de dispositif de piégeage il est connecté.

2. Dispositif IoT (1) selon la revendication 1, dans lequel le dispositif de piégeage fournit une zone de collecte pour arthropodes, dans lequel la caméra est configurée pour générer des images de la zone de collecte pour arthropodes.

3. Dispositif IoT (1) selon la revendication 1 ou la revendication 2, dans lequel le dispositif IoT (1) est configuré pour reconnaître s'il est connecté à un piège adhésif ou à une coupelle de capture remplie de liquide.

4. Dispositif IoT (1) selon l'une quelconque des revendications 1 à 3, dans lequel le dispositif IoT (1) est configuré pour reconnaître dans quelle couleur la zone de collecte est conçue et/ou quelle est la taille de la zone de collecte et/ou quelle forme présente la zone de collecte et/ou si un attractif est présent.

5. Dispositif IoT (1) selon la revendication 1, dans lequel les moyens de liaison réversible du dispositif IoT (1) avec le dispositif de piégeage comprennent des contacts électriques qui établissent une connexion électrique avec le dispositif de piégeage.

6. Dispositif IoT (1) selon la revendication 5, dans lequel le dispositif IoT (1), en tant que composant de reconnaissance, mesure une résistance afin de déterminer avec quel dispositif de piégeage il est connecté.

7. Dispositif IoT (1) selon la revendication 5, dans lequel le dispositif IoT (1) mesure une capacité afin d'identifier le dispositif de piégeage.

8. Dispositif IoT (1) selon la revendication 5, dans lequel le dispositif IoT (1) détermine le type du dispositif de piégeage connecté sur la base de broches sur le dispositif de piégeage qui établissent un contact électrique avec le dispositif IoT (1).

9. Dispositif IoT (1) selon la revendication 1, dans lequel le dispositif IoT (1) est configuré pour lire une mémoire de données d'un transpondeur RFID du dispositif de piégeage et pour déterminer le type du dispositif de piégeage sur la base des informations stockées dans la mémoire de données.

10. Système pour la surveillance d'arthropodes, comprenant :
• un dispositif de piégeage comprenant une zone de collecte pour arthropodes, et
• un dispositif IoT (1) selon l'une quelconque des revendications 1 à 9.

11. Système selon la revendication 10, dans lequel les moyens de liaison réversible du dispositif IoT (1) avec le dispositif de piégeage comprennent des contacts électriques qui établissent une connexion électrique avec le dispositif de piégeage, dans lequel le dispositif IoT (1) est configuré pour reconnaître, au moyen de la connexion électrique, avec quel type de dispositif de piégeage le dispositif IoT (1) est connecté, dans lequel le dispositif IoT (1) est configuré pour se configurer lui-même sur la base du type reconnu de dispositif de piégeage, dans lequel la configuration du dispositif IoT (1) comprend :
• la sélection d'un ou de plusieurs modèles pour détecter, localiser, identifier et/ou compter des arthropodes dans des images de la zone de collecte, et/ou
• la détermination du moment et/ou de la fréquence à laquelle la caméra du dispositif IoT (1) génère des images de la zone de collecte, et/ou
• la détermination de la résolution des images, et/ou
• la détermination de si et/ou comment la zone de collecte est éclairée, et/ou
• la détermination de quelle plage spectrale est utilisée pour éclairer la zone de collecte, et/ou
• la détermination de si une unité d'éclairage est allumée lors de la génération d'images, quelle unité d'éclairage est allumée, quand une ou plusieurs unité(s) d'éclairage est/sont allumée(s), et à quels moments et/ou à quels intervalles de temps une ou plusieurs unité(s) d'éclairage est/sont allumée(s), et/ou
• la détermination d'un intervalle de maintenance et/ou de nettoyage, et/ou
• la détermination d'une mise au point/d'un type de mise au point, et/ou
• la détermination de paramètres de caméra tels que temps d'exposition, ouverture, valeur ISO, balance des blancs, correction d'exposition, format d'image, mode scène et/ou stabilisateur d'image.

12. Procédé comprenant les étapes suivantes :
• fourniture d'un dispositif de piégeage pour arthropodes comprenant une zone de collecte,
• fourniture d'un dispositif IoT (1) selon l'une quelconque des revendications 1 à 9,
• connexion du dispositif IoT (1) avec le dispositif de piégeage, dans lequel lors de la connexion la caméra est automatiquement alignée par rapport à la zone de collecte de telle sorte qu'au moins une partie de la zone de collecte est reproduite sur un capteur d'image de la caméra,
• génération d'une image de la zone de collecte,
• stockage de l'image et/ou transmission de l'image et/ou d'informations concernant l'image à un système informatique séparé.

13. Procédé selon la revendication 12, dans lequel lors de la connexion du dispositif IoT (1) avec le dispositif de piégeage une connexion électrique est établie entre le dispositif IoT (1) et le dispositif de piégeage, dans lequel le dispositif IoT (1) est configuré pour reconnaître, via la connexion électrique, le type du dispositif de piégeage auquel le dispositif IoT (1) est connecté, dans lequel le procédé comprend en outre :
• la configuration du dispositif IoT (1) sur la base du type du dispositif de piégeage connecté au dispositif IoT (1).

14. Procédé selon la revendication 13, dans lequel le dispositif IoT (1) est configuré pour se configurer lui-même sur la base du type reconnu de dispositif de piégeage, dans lequel la configuration du dispositif IoT (1) comprend :
• la sélection d'un ou de plusieurs modèles pour détecter, localiser, identifier et/ou compter des arthropodes dans des images de la zone de collecte, et/ou
• la détermination du moment et/ou de la fréquence à laquelle la caméra du dispositif IoT (1) génère des images de la zone de collecte, et/ou
• la détermination de la résolution des images, et/ou
• la détermination de si et/ou comment la zone de collecte est éclairée, et/ou
• la détermination de quelle plage spectrale est utilisée pour éclairer la zone de collecte, et/ou
• la détermination de si une unité d'éclairage est allumée lors de la génération d'images, quelle unité d'éclairage est allumée, quand une ou plusieurs unité(s) d'éclairage est/sont allumée(s), et à quels moments et/ou à quels intervalles de temps une ou plusieurs unité(s) d'éclairage est/sont allumée(s), et/ou
• la détermination d'un intervalle de maintenance et/ou de nettoyage, et/ou
• la détermination d'une mise au point/d'un type de mise au point, et/ou
• la détermination de paramètres de caméra tels que temps d'exposition, ouverture, valeur ISO, balance des blancs, correction d'exposition, format d'image, mode scène et/ou stabilisateur d'image.
